# EUROPÄISCHE PATENTSCHRIFT

(11) **EP 3 164 038 B1**
(45) Veröffentlichungstag und Bekanntmachung des Hinweises auf die Patenterteilung: **25.10.2023**
(21) Anmeldenummer: 15729773.0
(22) Anmeldetag: 03.06.2015
(51) Int. Cl.: A47J 37/04, A47J 37/06

(54) **VORRICHTUNG ZUM ERHITZEN UND/ODER GAREN VON FLEISCHERZEUGNISSEN**
APPARATUS FOR HEATING AND/OR COOKING MEAT PRODUCTS
DISPOSITIF DE CHAUFFAGE ET/OU DE CUISSON DE PRODUITS CARNÉS

(30) Priorität: 01.07.2014 DE 202014005299 U; 07.04.2015 EP 15162664
(43) Veröffentlichungstag der Anmeldung: 10.05.2017
(73) Patentinhaber: reamotion GmbH, 27753 Delmenhorst (DE)
(72) Erfinder: OHLEN, Sylvia, 27753 Delmenhorst (DE); REALES BERTOMEO, Emilio, 27753 Delmenhorst (DE)
(74) Vertreter: Eisenführ Speiser
(86) Internationale Anmeldenummer: PCT/EP2015/062412
(87) Internationale Veröffentlichungsnummer: WO 2016/000900

(56) Entgegenhaltungen:
- WO-A1-2013/062832
- CA-A- 1 045 926
- DE-A1- 19 730 829
- US-A- 1 729 552
- US-A- 2 689 517
- US-A- 5 735 191
- US-A1- 2002 036 195
- US-A1- 2009 140 622

## Beschreibung

Die Erfindung betrifft eine Vorrichtung zum Erhitzen und/oder Garen von Lebensmitteln, insbesondere von Fleischerzeugnissen, gemäß Anspruch 1. In der Schnellgastronomie werden unter anderem Fleischerzeugnisse, wie Bratwürste oder Burger-Scheiben, mithilfe offener Grill- oder Brateinheiten und andere Lebensmittel, wie beispielsweise Pommes Frites, durch Frittieren in einer häufig Planzenöl enthaltenen nach oben offenen Fritteuse für den Verzehr zubereitet. Bei der herkömmlichen Zubereitung entstehen, aufgrund der Art der Zubereitung, typischerweise fetthaltige und geruchsintensive Dämpfe. Für den Betrieb von Schnellrestaurants und Imbissbetrieben bedeuten die entstehenden Dämpfe an vielen Standorten oft ein Problem. Mithilfe aufwändiger Absaug- und Filteranlagen wird versucht, die Belastung durch die beim Zubereiten der Lebensmittel entstehenden Dämpfe und Gerüche zu reduzieren.

Ein weiterer Punkt bei der Zubereitung der Speisen in der Schnellgastronomie ist in der Verwendung von Fetten und Ölen als Temperaturvermittler zu sehen. Speziell bei der Zubereitung der Lebensmittel bei zu niedrigen Temperaturen besteht nicht nur das Risiko, einen durch das Fett oder Öl im Produkt verursachten Kalorienüberschuss zu sich zu nehmen. Darüber hinaus können bei zu hohen Temperaturen während des Bratvorganges ungesunde Zerfallsprodukte entstehen, die beim Verzehr der Lebensmittel aufgenommen werden. Daher sind die in den Schnellrestaurants und Imbissbetrieben zum Einsatz kommenden Grill- und Brateinrichtungen sowie die Fritteusen auf einem bestimmten, nahezu gleichbleibenden Temperaturniveau zu halten. Dies ist jedoch mit einem hohen Energieaufwand verbunden.

Bei den herkömmlichen Zubereitungsmethoden bedarf es, um eine optimale Qualität des zuzubereitenden Lebensmittels gewährleisten zu können, darüber hinaus auch der ständigen Überwachung bzw. Kontrolle durch das Servicepersonal.

Aus der DE 20 2009 007 012 U1 ist beispielsweise eine Vorrichtung zum Garen von Bratwürsten bekannt, mithilfe der das Zubereiten von Bratwürsten bedarfsgerecht und damit individuell vorgenommen werden kann. Die Vorrichtung zum Garen von Bratwürsten weist eine Aufnahmeeinrichtung, ähnlich einem Toaster, für eine Bratwurst auf sowie eine der Bratwurstaufnahmeeinrichtung zugeordnete Wärmequelle mit wenigstens einem Heizelement. Das Heizelement ist ein die Brataufnahmeeinrichtung umgebender Heizmantel. Ein Nachteil ist, dass mit einer derartigen Vorrichtung zum einen nur wenige Bratwürste gleichzeitig zubereitet werden können und zum anderen weist jede Aufnahmeeinrichtung ein nur eine einzige Bratwurst umgebendes Heizelement auf. Dadurch wird vergleichsweise eine große Menge an Energie pro einzelner zuzubereitender Bratwurst benötigt

Aus US 5 735191 A, US 1 729 552 A oder US 2 689 517 A ist jeweils eine Vorrichtung zum Grillen von Lebensmitteln bekannt. Die Vorrichtung umfasst ein Gehäuse mit einem Aufnahmefach für einen über eine Öffnung in das Aufnahmefach einsetzbaren und daraus wieder entnehmbaren Korb für die zu erhitzenden Lebensmittel.

DE 197 30 829 A1 offenbart eine Vorrichtung zum Zubereiten von Lebensmitteln, welche alternativ als Heißluft-Zubereitungseinrichtung oder als Grillgerät ausgebildet ist.

CA 1 045 926 A zeigt eine Vorrichtung zum fettfreien Garen mit einem Gehäuse und einer zylindrischen Aufnahmekammer im Gehäuse für einen in die Aufnahmekammer einsetzbaren, drehbaren Aufnahmekorb für Lebensmittel.

Der vorliegenden Erfindung liegt die Aufgabe zugrunde, eine Vorrichtung zum Erhitzen und/oder Garen von Lebensmitteln aufzuzeigen, mittels der eine vereinfachte und schonende Zubereitung einer Mehrzahl von Lebensmitteln in einem Gerät bei einem insgesamt geringeren Energieaufwand ermöglicht wird.

Die Erfindung löst die ihr zugrundeliegende Aufgabe bei einer Vorrichtung zum Erhitzen und/oder Garen von Lebensmitteln der eingangs bezeichneten Art dadurch, dass zusätzlich eine Heißluft-Zubereitungseinrichtung für Lebensmittel vorgesehen ist, wobei die Heißluft-Zubereitungseinrichtung eine Kammer und eine oder mehrere in einem Heißluftstrom in der Kammer drehbeweglich aufnehmbare Trommel umfasst, welche eingerichtet ist, die Lebensmittel in der Trommel gleichmäßig den die Kammer durchströmenden Heißluftstrom auszusetzen.

Der Erfindung liegt die Erkenntnis zugrunde, dass mithilfe der in ein Aufnahmefach einführbaren Einsetzkassette, welche mit einem, mehreren, bevorzugt vier, fünf oder mehr Fleischerzeugnissen, wie z.B. Bratwürsten, bestückt werden kann, eine Aufnahmeeinrichtung ausgebildet ist, auch bezeichnet und insbesondere ausgeführt als Grilleinrichtung, mittels der eine energieeffiziente und zugleich schonende Form des Erhitzens gewährleistet wird. Zudem kann auf dem Einsatz von Fetten und Ölen als Temperaturvermittler innerhalb der erfindungsgemäßen Grilleinrichtung auf vorteilhafte Weise vorzugsweise auf ein Minimum verzichtet werden. Auch ein Wenden der innerhalb der Einsteckkassette aufgenommenen Lebensmittel ist nicht notwendig, da über die Einsteckkassette ein gleichmäßiges Garen von insbesondere dem Fleischerzeugnis von nahezu allen Seiten gewährleistet ist. Die Fleischerzeugnisse weisen nach ihrer Zubereitung an der gesamten Oberfläche eine bevorzugt einheitliche Bräunung für ein ansprechendes Äußeres auf. Mit der bevorzugt das Lebensmittel umschließenden Kassette, wobei mit Umschließen nicht ein Abschirmen des Lebensmittels vor dem Heizelement gemeint ist, wird die durch das Heizelement erzeugte Strahlungswärme aufgenommen und gespeichert. Dementsprechend werden die bevorzugt mit der Innenseite der Einsteckkassette in direktem Kontakt stehenden Fleischerzeugnisse von zumindest zwei Seiten aus, einer direkten Wärmeübertragung ausgesetzt.

Unter dem Begriff Fleischerzeugnisse sind vorliegend die größtenteils aus Muskelgewebe und anderen Weichteilen von Säugetieren, Geflügel, Fischen, Krebsen oder Muscheln hergestellten Produkte bzw. Halbfertigprodukte zu verstehen, die zum Einsatz in einer erfindungsgemäßen Grilleinrichtung geeignet sind.

Eine bevorzugte Weiterbildung der Erfindung sieht vor, dass zwei oder mehr Aufnahmefächer zum Aufnehmen von jeweils einer Einsetzkassette für die zuzubereitenden Fleischerzeugnisse vorgesehen sind, wobei jeweils einem Aufnahmefach ein einzeln oder separat ansteuerbares Heizelement zugeordnet ist. Mit dem Einsatz von zwei oder mehr Aufnahmefächern, in die jeweils eine Einsetzkassette einführbar ist, lässt sich je nach Bedarf die gewünschte Anzahl von Fleischerzeugnissen zubereiten. Sofern gleichzeitig ein großer Bedarf an zuzubereitenden Lebensmitteln besteht, wie beispielsweise Fleischerzeugnissen, können in Abhängigkeit von der gewünschten Anzahl der zu erhitzenden und/oder zu garenden Fleischerzeugnisse nur ein Aufnahmefach, zwei oder, je nach erfindungsgemäßer Ausgestaltung der Vorrichtung, auch mehr Aufnahmefächer mit Einsetzkassetten bestückt werden. Da jedem Aufnahmefach ein einzeln ansteuerbares Heizelement zugeordnet ist, wird auch nur an der jeweils benötigten Anzahl von Aufnahmefächern Wärmeenergie für die Zubereitung benötigt. Bevorzugt wird mithilfe der den Aufnahmefächern zugeordneten Heizelemente eine Infrarotstrahlung erzeugt.

Vorzugsweise weist das oder die Aufnahmefächer für die Einsteckkassetten eine sich im Wesentlichen in horizontaler Richtung erstreckende Einsetzrichtung auf. Mit der gewählten Einsteckrichtung ist erreicht, dass die innerhalb der Aufnahmeeinrichtung erzeugte Wärme nicht, wie bei der zum dem Stand der Technik bekannten Vorrichtungen zum Garen von Bratwürsten, nahezu ungehindert aus der nach oben gerichteten Öffnung, entweichen kann. Die von der Heizeinrichtung erzeugte Wärme wird durch den oberen geschlossenen Wandbereich somit innerhalb des Aufnahmefaches gehalten, da die warme Luft trotz ihrer geringeren Dichte am Aufsteigen über das oben geschlossene Aufnahmefach gehindert wird. Damit wird die erhitzte Luft bzw. Wärme effektiv für den Erhitzungs- und/oder Garprozess genutzt. Jedes Aufnahmefach weist, mit Ausnahme seines Öffnungsbereiches zum Einsetzen der Einsteckkassetten, bevorzugt den Aufnahmeraum des Aufnahmefaches begrenzende Wandungen auf, mit denen eine Abgrenzung zwischen den einzelnen Aufnahmefächern oder zu Oberfläche des Gerätegehäuses erreicht ist. Eine bevorzugte Ausgestaltung der erfindungsgemäßen Vorrichtung sieht zusätzlich die Verwendung von Isoliermaterial zwischen den Wandungen benachbarter Aufnahmefächer oder zur Wandung des Gerätegehäuses vor.

Bevorzugt ist die Öffnung im Gerätegehäuse durch einen Wandbereich der im Aufnahmefach einsetzbaren Einsetzkassette im Wesentlichen vollständig ausgefüllt. Einsetzkassette und Aufnahmefach weisen nach dem Einsetzen der Einsetzkassette eine derartige Anordnung zueinander auf, dass die Öffnung des Aufnahmefachs ausgefüllt bzw. verdeckt ist. Im Inneren des Aufnahmefachs entstehende Wärme wird bevorzugt durch den im Bereich der Öffnung verlaufenden Wandbereich der Einsetzkassette selbst darin gehindert aus der vorzugsweise in vertikaler Ebene verlaufenden Öffnung an der Front des Gerätegehäuses zu entweichen. Bevorzugt wird die Öffnung des Aufnahmefaches durch eine im Wesentlichen parallel zur Front des Gerätegehäuses verlaufende Wandung der Einsetzkassette ausgefüllt. Die Öffnung des Aufnahmefachs weist eine bevorzugt rechteckige Form auf. Die die Öffnung ausbildenden Kanten des Gerätegehäuses weisen zudem einen geringen Abstand von wenigen Millimetern zu der in das Aufnahmefach vorzugsweise einschiebbaren Einsetzkassette auf.

Gemäß einer Weiterbildung der Erfindung weist die Einsetzkassette der erfindungsgemäßen Grilleinrichtung eine die Fleischerzeugnisse aufnehmende Außenhülle auf, welche mit einer Vielzahl von Durchbrüchen ausgestattet ist. Über die Durchbrüche in der Außenhülle der die Fleischerzeugnisse bevorzugt nahezu vollständig umschließenden Einsetzkassette kann die von der Heizeinrichtung bevorzugt erzeugte Strahlungswärme auf einen großen Anteil der Oberfläche des zu erhitzenden bzw. zu garenden Fleischerzeugnisses einwirken. Bevorzugt weist die Außenhülle in nahezu sämtlichen Wandbereichen Durchbrüche auf. Eine Ausgestaltung der Erfindung sieht vor, dass einzig der die Öffnung des Aufnahmefaches verschließende Wandbereich der Einsetzkassette keine Durchbrüche aufweist. Darüber wird der Austritt der Wärme aus dem Aufnahmefach so gering wie möglich gehalten. Die Durchbrüche in der Außenhülle weisen bevorzugt die unterschiedlichsten Formen auf, wie beispielsweise schlitzförmig, kreisförmig oder rechteckig. Auch unregelmäßige Formen der Schlitze in der Außenhülle sind möglich, wie z.B. s-förmige oder mäanderförmige Durchbrüche.

Eine bevorzugte Ausgestaltung der Erfindung sieht vor, dass die Außenhülle zwei oder mehr Wandbereiche, bevorzugt vertikal und parallel zur Einsetzrichtung in das Aufnahmefach verlaufende Seitenwände aufweist, welche eine gitterartige Ausgestaltung haben. Die gitterartige Ausgestaltung von mindestens den die Hauptwärme-Eintragsflächen der Einsetzkassetten ausbildenden Seitenwänden hat den Vorteil, dass der Wärmeeintrag in das Innere der Einsetzkassette weiter verbessert ist. Vorzugsweise kommen die Fleischerzeugnisse mit den gitterartigen Wandbereichen der Einsetzkassette in unmittelbaren Kontakt, wodurch auf der Oberfläche ein Bratmuster erzeugt wird. Die Einsetzkassette weist bevorzugt eine quaderförmige Ausgestaltung auf, wobei die Flächen der Außenhülle, die benachbart zu einem Heizelement der Heizeinrichtung angeordnet sind wenigstens Durchbrüche im Wandbereich oder eine gitterartige Struktur aufweisen. In einer Ausgestaltung der Erfindung bildet die Heizeinrichtung eine Art Heizmantel um vorbestimmte Wandbereiche der Einsetzkassette aus.

Eine andere Ausgestaltung der erfindungsgemäßen Einsetzkassette sieht eine Außenhülle aus vorzugsweise zwei beweglich aneinander angelenkten Hüllenteilen vor. Die Einsetzkassette wird bevorzugt aus zwei Hüllenteilen ausgebildet, die beweglich über ein Gelenk miteinander verbunden sind. Durch die bewegliche Kopplung der Hüllenteile ist ein einfacher Zugang zum Aufnahmeraum bzw. in das Innere der Einsetzkassette gewährleistet. Dadurch können die zu erhitzenden und/oder zu garenden Fleischerzeugnisse einfach in den Aufnahmeraum der durch die bevorzugt als klappbare Halbschalen ausgebildeten Hüllenteile der Einsetzkassette eingelegt werden. Die Hüllenteile sind über ein oder mehrere Scharniere miteinander verbunden. Das Scharnier ist vorzugsweise an dem Wandbereich der Einsetzkassette ausgebildet, der den unteren Bodenbereich der erfindungsgemäßen Einsetzkassette ausbildet. Das Scharnier wird dabei bevorzugt aus Wandbereichen der Hüllenteile selbst ausgebildet, die hülsenartig geformt sind und über vorzugsweise eine zylindrische Stange in vorbestimmter Position zueinander gehalten werden.

Bevorzugt weisen die Hüllenteile auf ihre die Innenseite des Aufnahmefaches für die Fleischerzeugnisse in vorbestimmten Abständen parallel zueinander verlaufende Stege zum Unterteilen des Aufnahmeraums für die Fleischerzeugnisse auf. Mithilfe der innenseitig angeordneten bzw. ausgebildeten Stege ist eine vorbestimmte Ausrichtung der Fleischerzeugnisse gewahrt. Ein Berühren der Oberflächen der Fleischerzeugnisse untereinander, was den Garungsprozess verlangsamen würde, wird bevorzugt dadurch auf vorteilhafte Weise vermieden, dass die Stege zwischen einander benachbarte Lebensmittel vorstehen. Mithilfe der im Aufnahmefach verlaufenden Stege werden bevorzugt vier, fünf oder mehr Einlegefächer ausgebildet. Eine alternative Ausgestaltung der Erfindung sieht vor, dass an Stelle von den an den Hüllenteilen starr angeformten Stegen in die Hüllenteile einlegbare Einlageelemente verwendet werden, die beliebig austauschbar sind. Mithilfe der Einlageelemente ist gewährleistet, dass die unterschiedlichsten Fleischerzeugnisse, wie beispielsweise Bratwürste, Wurstbälle, als Halbfertigprodukte vorliegende Formfleischstücke oder Filetstücke vom Fisch in vorgegebener Ausrichtung über die Einsetzkassette aufgenommen werden können. Bevorzugt werden Einlageelemente eingesetzt, die mit auf die zuzubereitenden Fleischerzeugnisse abgestimmten Mustern versehen sind, welche während des Garprozesses bevorzugt ein entsprechendes Muster auf einem Oberflächenabschnitt des Fleischerzeugnisses erzeugen.

Eine alternative Ausgestaltung der in die Aufnahmefächer einsetzbaren Einsetzkassetten sieht vor, dass die Hüllenteile als zwei beweglich aneinander angelenkte Plattenkörper ausgebildet sind, die aufeinander zugewandten Flächenbereichen miteinander korrespondierende Vertiefungen, vorzugsweise halbkugelförmige Vertiefungen aufweisen. Die miteinander korrespondierenden halbkugelförmigen Vertiefungen der beiden Hüllenteile bilden im zusammengeklappten Zustand bevorzugt kugelförmige Aufnahmeräume aus. Mithilfe der erfindungsgemäß ausgebildeten Einsetzkassette können bevorzugt kugelförmige Bratlinge mit entsprechend an die Abmessungen der kugelförmigen Aufnahmen angepassten Dimensionen erzeugt werden. Die halbkugelförmigen Vertiefungen in einem jeweiligen Plattenkörper weisen Durchbrüche auf, worüber der Wärmeeintrag auf einen im Aufnahmeraum befindlichen Bratling verbessert ist.

Vorzugsweise ist mindestens einer der Plattenkörper eingerichtet einen Prägeeinsatz aufzunehmen, der an der Innenseite der die Vertiefungen jeweils ausbildenden Wandung anordbar ist. Mit der Verwendung eines Prägeeinsatzes ist die Möglichkeit geschaffen, eine Beschriftung oder Bezeichnung auf die Oberfläche der in der Einsatzkassette zubereiteten kugelförmigen Bratlinge aufzubringen. Die verwendeten Prägeeinsätze können die verschiedensten Schriftzeichen oder Zahlen zur Darstellung von zum Beispiel Herstellernamen oder Markenzeichen aufweisen. Der bevorzugt metallische Prägeeinsatz erzeugt eine verstärkte Bräunung auf der Oberfläche des zuzubereitenden Bratlings, welche somit gut erkennbar ist. Der Prägeeinsatz weist vorzugsweise ein kreisförmiges Prägeteil auf, dass auf seiner dem Aufnahmeraum zugewandten Vorderseite ein oder mehrere Schriftzeichen aufweist. In einer weiteren Ausgestaltung weist der Prägeeinsatz auf der Rückseite, welche der Wandung der Vertiefung zugewandt ist, ein oder mehrere Steck- beziehungsweise Klemmelemente zum Arretieren des Prägeeinsatzes in der Vertiefung auf. Die Steck- beziehungsweise Klemmelemente sind komplementär zu einem oder mehreren Durchbrüchen in der Wandung der Vertiefung ausgebildet, wodurch ein sicherer Halt durch beispielsweise einen Kraftschluss oder Formschluss bewirkt ist. Die Prägeeinsätze sind bevorzugt an den Hüllenteilen der Einsetzkassette austauschbar ausgebildet.

In einer Ausgestaltung der Erfindung weisen die Hüllenteile der Einsetzkassette bevorzugt nach außen vorstehende Anschlagelemente auf, welche eingerichtet sind, die miteinander in Anlage gebrachten Hüllenteile auf einen vorbestimmten Abstand zu halten und in einer Führung des Aufnahmefaches aufgenommen zu werden. Die Anschlagelemente werden bevorzugt an Flächenbereichen der Hüllenteile ausgebildet bzw. angeordnet, die vorzugsweise dem Verbindungsbereich der Hüllenteile am Boden der Einsatzkassette gegenüberliegend sind. Mit den Anschlagelementen wird die Klappbewegung der bevorzugt als Halbschalen ausgebildeten Hüllenteile bei der Schließbewegung begrenzt. Die Anschlagelemente sind zum Beispiel streifenförmige Abkantungen der Hüllenteile, die in einem rechten Winkel nach außen an einen jeweils zugeordneten Wandbereich eines jeweiligen Hüllenteils abstehen. Zudem werden die Anschlagelemente in einer bevorzugt als Ausnehmung ausgebildeten Führung an der oberen waagerecht verlaufenden Wand des Aufnahmefachs geführt. Durch das Führen in der nutartigen Ausnehmung ist eine vorbestimmte Ausrichtung der Hüllenteile während des Einsetzens, des Verbleib sowie des Entnehmens der Einsetzkassette im Aufnahmefach und der Heizeinrichtung bewirkt.

Eine andere Weiterbildung der erfindungsgemäßen Vorrichtung sieht vor, dass die Einsetzkassette einen Handgriff aus einem bevorzugt isolierenden Material aufweist. Über den an der Einsetzkassette angeordneten Handgriff können diese jeweils sicher in das Aufnahmefach eingeschoben und daraus wieder entnommen werden, ohne das Risiko einer möglichen sich zuziehbaren Verletzung durch den Bediener. Der Handgriff ist bevorzugt aus einem wärmeisolierenden Material, wie beispielsweise Kunststoff oder einem Holzwerkstoff. Der Handgriff ist über einen an der Außenhülle Einsetzkassette abstehenden bzw. auskragenden Griffträger mit der Einsatzkassette verbunden. Bevorzugt weist der Handgriff bei der in das Aufnahmefach der erfindungsgemäßen Vorrichtung eingesetzten Einsetzkassette, eine vertikale Ausrichtung auf, wodurch das sichere Greifen des Handgriffs möglich ist.

In einer anderen Ausgestaltung der Erfindung ist der Handgriff bevorzugt drehbar an dem Griffträger eines ersten Hüllenteiles angeordnet und eingerichtet ist, mit seinem Verriegelungsabschnitt mit einem Vorsprung am Griffträger des zweiten Hüllenteiles durch Verdrehen in eine verriegelnde oder entriegelnde Stellung gebracht zu werden. Mithilfe des an einem Hüllenteil um seine Längsachse drehbaren Handgriff kann eine Schließfunktion an der Einsatzkassette gewährleistet werden. Vorzugsweise ist die Drehachse parallel zur Teilungsebene der miteinander fixierbaren Hüllenteile ausgerichtet. Durch Verdrehen des Handgriffs um eine Viertel bis etwa eine halbe Umdrehung wird dieser von seiner Freigabeposition in die Sperrposition überführt. Damit ist ein ungewolltes bzw. selbsttätiges Aufklappen der schwenkbeweglich miteinander verbundenen Hüllenteile der Einsetzkassette vermieden, insbesondere während der Handhabung der Einsetzkassette und bevorzugt vor dem Einschieben und nach dem Entnehmen aus dem Aufnahmefach, ab dem Moment, wo keine Führung der Anschlagelemente mehr vorliegt. Gemäß einer alternativen Ausgestaltung ist der Handgriff bevorzugt zweiteilig ausgebildet, wobei jedes den Handgriff ausbildende Griffteil über einen Griffträger mit einem Hüllenteil der Einsatzkassette verbunden ist. Die Schließfunktion ist dann durch das Greifen der beiden Griffteile bewirkt. Anstelle der zweiteiligen Ausgestaltung des Handgriffs kann auch eine separat zu betätigende Verriegelung an der Einsetzkassette vorgesehen sein, welche die Hüllenteile bevorzugt an der dem Scharnier gegenüberliegenden Seite miteinander koppelt.

Vorzugsweise weist die Heizeinrichtung parallel zu den Seitenwänden der Einsetzkassetten ausgerichtete Heizelemente auf. Mittels der Heizelemente wird bevorzugt eine Infrarotstrahlung erzeugt, die sowohl auf die Seitenwände der Einsetzkassetten als auch direkt auf das im Aufnahmeraum der Einsatzkassetten aufgenommene Fleischerzeugnis, aufgrund der Durchbrüche in den Seitenwänden, einwirkt und diese somit erwärmt bzw. erhitzt. Die Heizelemente sind innerhalb des Aufnahmefachs in einem relativ geringen Abstand, von beispielsweise 5 mm bis 1 cm zu den Seitenwänden der Einsetzkassette angeordnet. Die Heizeinrichtung ist bevorzugt eine elektrische Widerstandsheizung mit auf Keramikplatten gewickelten Heizwendeln als Heizelemente. Die Oberfläche des Fleischerzeugnisses steht auf der Innenseite der Einsetzkassette in Anlage mit den Seitenwänden, wodurch mittels der erhitzten Seitenwände der Einsetzkassette ein Grillmuster auf der Oberfläche der zuzubereitenden Fleischerzeugnisse erzeugt wird.

Bevorzugt ist die Einsetzkassette aus einem metallischen Werkstoff ausgebildet. Der Einsatz eines metallischen Werkstoffs zur Ausbildung ermöglicht die Herstellung der Einsetzkassetten mittels einfacher Herstellungsverfahren, wie beispielsweise dem Stanzen und/oder dem formprägenden Pressen. Als Werkstoff werden beispielsweise rostfreie Stähle oder Bleche eingesetzt, welche mit einer vorzugsweise korrosionsbeständigen Beschichtung versehen sind. Des Weiteren ist vorgesehen, dass das unterste Einlegefach am Bodenbereich der Einsetzkassette eine im Wesentlichen zur Mitte oder den Enden des Kassettenbodens angewinkelte Bodenfläche aufweist. An den Fleischerzeugnissen während der Zubereitung austretende bzw. sich abschlagende Flüssigkeit, wie Fett oder Kondensat, gelangen auf den Boden des Aufnahmeraumes und werden gezielt über den Kassettenboden abgeleitet. Die Einsetzkassette kann zu diesem Zweck mit im Bodenbereich eingelassenen Durchbrüchen zum gezielten Abführen von in der Einsetzkassette entstehender Flüssigkeit ausgerüstet sein.

Gemäß einer anderen Weiterbildung ist ein sich unterhalb der Aufnahmeeinrichtung horizontal erstreckender Auffangbehälter vorgesehen. Mithilfe des Auffangbehälters unterhalb der Aufnahmeeinrichtung, auch bezeichnet als erfindungsgemäße Grilleinrichtung, werden bei der Zubereitung der Fleischerzeugnisse entstehende Flüssigkeiten einfach und sicher aufgefangen. Damit kann einer Verschmutzung der erfindungsgemäßen Vorrichtung entgegengewirkt werden. Bevorzugt sind die Aufnahmefächer für die Einsetzkassetten im Bodenbereich mit Ablässen ausgerüstet, die einen Zugang zu dem unterhalb der Aufnahmeeinrichtung angeordneten Auffangbehälter gewährleisten. Die die Ablässe ausbildenden Flächen im Bodenbereich eines jeweiligen Aufnahmefaches weisen eine bevorzugte Ablaufrichtung für die bei der Zubereitung der Fleischerzeugnisse entstehenden Flüssigkeiten auf, was das Abführen der Flüssigkeiten in Richtung des bevorzugt trogartigen Auffangbehälters weiter vereinfacht. Der Auffangbehälter weist einen bevorzugt ebenen Behälterboden und sich senkrecht dazu erstreckende Behälterwände auf.

Gemäß einer Weiterbildung der Erfindung ist die Heizeinrichtung mit einer bevorzugt elektronischen Steuereinheit zum Steuern der Gartemperatur und/oder Garzeit signalleitend gekoppelt. Damit kann gezielt Einfluss auf die Gartemperatur in den Aufnahmefächern sowie die Garzeit in Abhängigkeit von den zuzubereitenden Fleischerzeugnissen genommen werden. Bevorzugt ist die Steuereinheit ausgebildet, die Heizelemente für die unterschiedlichen Aufnahmefächer individuell anzusteuern. Dadurch wird es möglich, unterschiedliche Fleischerzeugnisse, welche bei unterschiedlichen Gartemperaturen zubereitet werden müssen, zur gleichen Zeit in benachbarten Aufnahmefächern zubereiten zu können. Mithilfe der zwischen den Aufnahmefächern vorhandenen Isolierung, ist darüber hinaus gewährleistet, dass eine Beeinträchtigung der Temperatur zwischen benachbarten Aufnahmefächern und den darin zubereiteten Lebensmitteln vermieden wird.

Gemäß der vorliegenden Erfindung ist an der Vorrichtung zusätzlich zur Grilleinrichtung eine Heißluft-Zubereitungseinrichtung für Lebensmittel vorgesehen. Der Erfindung liegt die Erkenntnis zu Grunde, dass mithilfe einer Heißluft-Zubereitungseinrichtung, welche der als Grill- oder Gareinrichtung ausgeführten Aufnahmeeinrichtung für die Fleischerzeugnisse zugeordnet ist, Zubereitung von Lebensmitteln möglich ist, die sonst üblicherweise in Fritteusen unter Einsatz großen Mengen von Öl oder Fett zubereitet werden. Der Einsatz einer Heißluft-Zubereitungseinrichtung neben der Grill- oder Gareinrichtung an der erfindungsgemäßen Vorrichtung ermöglicht eine schnelle, schonende und vor allem fettarme Zubereitung verschiedenster Lebensmittel. Damit wird das Zubereiten von Speisen im Bereich der Schnellrestaurants und Imbissbetriebe auf vorteilhafte Weise weiter vereinfacht. Zudem ist mittels der erfindungsgemäßen Vorrichtung eine Energieeinsparung möglich, da die Gareinrichtung und auch die Heißluft-Zubereitungseinrichtung je nach Bedarf eingeschaltet werden und bereits nach kürzester Zeit betriebsbereit sind. Ein Vorhalten vorbestimmter Temperaturen an den Grill- oder Gareinrichtungen oder der Heißluft-Zubereitungseinrichtung ist vorliegend nicht notwendig.

Bevorzugt weißt die Heißluft-Zubereitungseinrichtung ein Gebläse und ein Heizgerät auf, wobei das Heizgerät im vom Gebläse erzeugten und innerhalb des Gerätegehäuses zumindest abschnittsweise geführten Luftstrom angeordnet ist. Mithilfe des Heizgerätes im Luftstrom ist eine einfache und zugleich energieeffiziente Erwärmung des innerhalb des Gerätegehäuses geführten Luftstromes gewährleistet. Bevorzugt wird während der Zubereitung des Lebensmittels in der Heißluft-Zubereitungseinrichtung zumindest während des Vorheizens und auch während der Zubereitung des Lebensmittels selbst ein geschlossener Kreislauf erzeugt, in dem und entlang dem der zu erwärmende oder bereits erwärmte Heißluftstrom geführt wird. Damit ist gewährleistet, dass zum Zubereiten des Lebensmittels in der Heißluft-Zubereitungseinrichtung nicht ständig neue in das Gerätegehäuse hineingeleitete kalte Luft erwärmt werden muss. Durch den im Kreislauf geführten Luftstrom kann das Heizgerät nach Erreichen der zum Zubereiten des Lebensmittels vorgesehenen Temperatur zumindest vorübergehend abgeschaltet werden. Damit ist die Effizienz bei der Zubereitung der Lebensmittel weiter verbessert und der Energiebedarf der erfindungsgemäßen Vorrichtung deutlich vermindert. Mit dem Gebläse, wobei bevorzugt ein Axial- oder Radialventilator zum Einsatz kommt, kann der notwendige Luftstrom innerhalb des Gerätegehäuses erzeugt werden, mit welchem das zuzubereitende Lebensmittel bevorzugt fortwährend beaufschlagt wird.

Gemäß der Erfindung ist vorgesehen, dass die Heißluft-Zubereitungseinrichtung eine Kammer und eine oder mehrere im Heißluftstrom drehbeweglich aufnehmbare Trommel umfasst, welche eingerichtet ist, das Lebensmittel in der Trommel gleichmäßig den die Kammer durchströmenden Heißluftstrom auszusetzen. Bevorzugt weist die Heißluft-Zubereitungseinrichtung eine geschlossene bzw. verschließbare Kammer auf, innerhalb der sich eine mit dem zuzubereitenden Lebensmittel bestückbare Trommel zumindest während der Zubereitungsphase des Lebensmittels drehbeweglich angeordnet ist. Über die Drehung der Trommel ist eine Bewegung des Lebensmittels innerhalb der Trommel erzeugt, ähnlich einer Bewegung beim Waschvorgang in der Trommel einer Waschmaschine. Durch die Drehbewegung der Trommel wird das sich insbesondere aus einer Mehrzahl an Einzelgütern zusammensetzende Lebensmittel gleichmäßig dem erzeugten Heißluftstrom ausgesetzt. Damit kann der Vorgang des Erwärmens, im Vergleich zu einem unbeweglich mit Heißluft beaufschlagtem Lebensmittel, effektiver und gleichzeitig in verkürzter Zeit durchgeführt werden. Bevorzugt bewegt sich die Trommel innerhalb der Kammer kontinuierlich bzw. fortwährend während des Erwärmungsvorgangs des zuzubereitenden Lebensmittels.

Gemäß einer Ausgestaltung der Erfindung weist die Trommel einen bevorzugt zylindrischen Aufnahmeraum für die Lebensmittel auf und ist mit einer Zentralöffnung zum Einbringen von Heißluft an vorzugsweise einer Stirnwand ausgerüstet. Durch die zylindrische Ausgestaltung der Trommel lässt sich innerhalb der Kammer die Rotationsbewegung der Trommel einfach umsetzen. Die Kammer weist bevorzugt ebenfalls eine zylindrische Ausgestaltung bzw. Formgebung auf, wobei der Innendurchmesser der Kammer nur geringfügig größer ist als der Außendurchmesser der Trommel. Unter geringfügig größer sind hier Abmessungen im Bereich zwischen 2 bis 10 mm zu verstehen. Mittels der bevorzugt an einer ebenen, kreisförmigen Stirnwand ausgebildeten Zentralöffnung der Trommel wird die heiße Luft in das Trommelinnere eingegeben. Über die Zentralöffnung ist eine konzentrierte Zufuhr der erzeugten Heißluft in das Trommelinnere gewährleistet. Die weist Zentralöffnung vorzugsweise einen Durchmesser auf, der ungefähr einem Viertel bis etwa einem Drittel des Trommeldurchmessers entspricht. Damit ist eine entsprechend hohe Durchflussrate der Heißluft durch die und ein hoher Wärmeeintrag in die Trommel erreicht.

In einer anderen Weiterbildung der Erfindung weist die Trommel einen der Stirnwand mit der Zentralöffnung gegenüberliegend angeordneten Endbereich mit bevorzugt umfangsseitig angeordneten Auslässen auf. Mithilfe der gegenüberliegend zur Zentralöffnung angeordneten Auslässen ist bewirkt, dass der Innenraum der Trommel bestmöglich in Längsrichtung der Trommel von dem Heißluftstrom durchströmt wird. Mittels der gezielten Anordnung von Einlass und Auslass an entgegengesetzten Endbereichen der Trommel sind Trommelabschnitte oder -bereiche vermieden, die nicht vom Heißluftstrom durchströmt werden. Die Auslässe sind vorzugsweise gleichmäßig über den endseitigen Umfangsbereich der Trommel verteilt angeordnet. Bevorzugt bilden die Vielzahl der Auslässe eine sich über den gesamten Umfang der Trommel erstreckenden Auslassbereich aus. Die Auslässe weisen die Form eines sich in Längsrichtung der Trommel erstreckenden Langlochs auf und sind jeweils unmittelbar zueinander benachbart angeordnet. Zwischen zwei benachbart angeordneten Auslässen ist ein Steg vorgesehen, der nur einen Bruchteil der Breite aufweist, wie die Breite des Auslasses in Umfangsrichtung.

In einer anderen Ausgestaltung der Erfindung weist die Trommel eine sich entlang ihrer inneren Mantelfläche spiralförmig erstreckende, feststehende Wendel zum Umwälzen der in der Trommel aufgenommenen Lebensmittel oder einen in der Trommel verstellbaren Aufnahmekorb mit entlang des Korbumfanges verteilt angeordneten Aufnahmefächern für die Lebensmittel auf. Mithilfe der Wendel ist die gleichmäßige Bewegung des eine Vielzahl von Stückgütern aufweisenden Lebensmittels, wie beispielsweise Pommes Frites, verbessert. Die unmittelbar an der Trommelwandung anliegenden Lebensmittel werden bei der Rotation der Trommel zumindest ein stückweit gehalten und bewegen sich über einen vorbestimmten Drehwinkel mit. Durch die Wendel wird ein Rutschen des Lebensmittels entlang der Trommelwandung in Umfangsrichtung verhindert und eine gleichmäßige Durchmischung bewirkt. Dementsprechend gelangt beispielsweise jedes Einzelgut im gleichen Maße in Kontakt mit dem Heißluftstrom wie jedes andere Einzelgut auch. Die Wendel ist bevorzugt aus einem streifenförmigen Blechkörper hergestellt. Bevorzugt wird die Außenkante der Wendel stoffschlüssig mit der Innenseite der Trommel verbunden, insbesondere mit der Innenseite verschweißt. Mit der anderen alternativen Ausgestaltung der Erfindung, bei der ein in der Trommel verstellbar aufgenommener Aufnahmekorb vorgesehen ist, werden die zuzubereitenden Lebensmittel , wie beispielsweise Koch- oder Brühwürste, bevorzugt in einer festen Ausrichtung zur Mittenachse der Trommel gehalten und kontrolliert innerhalb der Heißluft-Zubereitungseinrichtung bewegt. Der Aufnahmekorb kann vorzugsweise aus der Trommel entnommen und wieder in diese eingesetzt und an dieser befestigt werden. Bevorzugt wird innerhalb der Heißluft-Zubereitungseinrichtung durch Zugabe von Feuchtigkeit in den Heißluftstrom ein heißer Dampfstrom erzeugt. Die Heißluft-Zubereitungseinrichtung hat somit die Funktion einer Brüheinheit, für die in den Aufnahmefächern des Aufnahmekorbes angeordneten Lebensmittel. Darüber ist ein schonendes Garen der Lebensmittel gewährleistet, ohne dass diese austrocknen.

Vorzugsweise wird der mit Feuchtigkeit beladene Heißluftstrom vor dem Austreten aus der erfindungsgemäßen Vorrichtung abgekühlt, wobei ein Großteil der Feuchtigkeit auskondensiert. Die auskondensierte Flüssigkeit kann bevorzugt zum Befeuchten des Heißluftstromes wiederverwendet werden.

Vorzugsweise sind die Wandbereiche der Aufnahmefächer für die Lebensmittel am Aufnahmekorb perforiert bzw. weisen ein oder mehrere Durchbrüche auf. Über die Durchbrüche in den Wandflächen der Aufnahmefächer gelangen die Außenseiten der in den Aufnahmefächern angeordneten Lebensmittel großflächig mit dem durch die Kammer der Heißluft-Zubereitungseinrichtung strömenden Heißdampf in Kontakt. Darüber ist eine gleichmäßige Erwärmung über bevorzugt die gesamte Oberfläche und damit verkürzte Zubereitungszeiten der Lebensmittel gewährleistet.

Vorzugsweise ist die Trommel reversibel koppel- und entkoppelbar mit einer in der Kammer drehbar gelagerten Halterung, wobei die Halterung mit einem Antriebsmittel drehgebend gekoppelt ist. Zwischen der Trommel und der Halterung ist eine beliebig oft wiederholbare Entkopplung und Kopplung möglich, sodass die Trommel bevorzugt aus der Kammer der erfindungsgemäßen Heißluft-Zubereitungseinrichtung entnommen und wieder eingesetzt werden kann. Die Halterung weist bevorzugt ein mit einem stirnseitigen Endbereich der Trommel korrespondierendes Aufnahmeteil auf, an dem die Trommel jeweils während der Zubereitung des Lebensmittels in der Trommel vorübergehend befestigt wird. Das Aufnahmeteil ist vorzugsweise ein Rotationskörper, der einen Außenumfang ähnlich dem Durchmesser der Trommel aufweist. Die Halterung für die Trommel ist bevorzugt eine Drehbewegung übertragend mit einem Antriebsmittel mechanisch verbunden. Bevorzugt ist zwischen Antriebsmittel und dem die Trommel haltenden Aufnahmeteil ein als Übersetzungsgetriebe dienendes Koppelgetriebe vorgesehen. Das Antriebsmittel ist vorzugsweise ein Elektromotor, mit dem auf einfache Weise die benötigte Drehbewegung für die Trommel erzeugt werden kann. Das um eine Rotationsachse drehbeweglich aufgenommene Aufnahmeteil weist im Bereich seines Außendurchmessers eine Außenverzahnung auf, die mit einem mit der Antriebswelle des Antriebsmittels gekoppelten Antriebsritzel kämmt. Die von der Trommel umgesetzte Drehzahl beträgt vorliegend ungefähr zwei bis drei Umdrehungen pro Minute. Umdrehungszahlen von vier, fünf oder mehr Umdrehungen pro Minute sind ebenfalls möglich.

Zudem weist die Trommel an der Außenseite der bevorzugt die Zentralöffnung aufweisenden Stirnwand mehrere Verriegelungsteile auf, die mit in axialer und/oder radialer Richtung in die Kammer vorstehenden Rastelementen der Halterung korrespondieren. Mithilfe der Verriegelungsteile an der Trommel, die in Richtung der Halterung an der rückseitigen Stirnwand der Trommel vorstehen, und mittels der Rastelemente ist eine beliebig oft reversibel koppel- und entkoppelbare Verbindung, ähnlich einem Bajonettverschluss, auf einfache Weise möglich. Verriegelungsteile und Rastelemente greifen derart korrespondierend ineinander, dass die Trommel in einer Rotationsrichtung drehfest mit dem Aufnahmeteil gekoppelt wird und in die entgegengesetzte Richtung das Lösen der Verbindung erreicht wird. Die drehfeste Verbindung zwischen Trommel und Aufnahmeteil wird dabei durch eine Bewegung der Trommel entgegen der gängigen Antriebsrichtung des die Trommel antreibenden Antriebs hergestellt. Bei einer Bewegung der Trommel in Richtung der Drehbewegung des Antriebsmittels wird die Verbindung zwischen den Verriegelungselementen an der Trommel und den Rastelementen am Aufnahmeteil aufgehoben. Bevorzugt sind mehrere, bevorzugt drei Verriegelungsteile auf einem Teilkreisdurchmesser nahe des Außenumfangs der Trommel im gleichmäßigen Abstand zueinander angeordnet, wodurch eine sichere Drehmomentübertragung gewährleistet ist.

Bevorzugt weist die Trommel im Mantelbereich eine Befüll- und Entnahmeöffnung auf, welche sich vorzugsweise über mehr als die Hälfte der Trommellänge und über einen Winkel von etwa einem Fünftel des Gesamtumfangs der Trommel erstreckt. Um die zuzubereitenden Lebensmittel in die Trommel eingeben bzw. zu entnehmen können, ist eine Befüll- und Entnahmeöffnung im Bereich des Mantels der Trommel vorgesehen. Die Öffnung am Trommelmantel ermöglicht ein einfaches Bestücken und eine einfache Ausgabe der Lebensmittel nach erfolgter Zubereitung. Vorzugsweise erstreckt sich die Befüll- und Entnahmeöffnung über wenigstens die Hälfte der Trommellänge, bevorzugt über etwa Dreiviertel der Trommellänge. Das Öffnungsmaß in Umfangsrichtung beträgt etwa zwischen einem Sechstel und einem Viertel des Gesamtumfangs der Trommel, bevorzugt etwa einem Fünftel des Gesamtumfangs, was etwa 75 ° entspricht. Die Befüllöffnung ist mit einer die Befüll-und Entnahmeöffnung verschließenden Abdeckung ausrüstbar.

Bevorzugt weist die Trommel einen die Öffnung der Kammer im Gerätegehäuse abdeckenden, bevorzugt transparenten Deckel auf, welcher starr mit dem Trommelmantel verbunden ist. Die erfindungsgemäße Vorrichtung weist anstelle eines schwenkbar an der Frontseite des Gerätegehäuses angeordneten Kammerdeckels einen unmittelbar mit dem Trommelmantel fest verbundenen Deckel auf. Der Deckel führt damit im Betrieb der Heißluft-Zubereitungseinrichtung zusammen mit der Trommel eine Drehbewegung aus. Darüber ist auf vorteilhaft einfache Weise erkennbar, ob die Heißluft-Zubereitungseinrichtung noch in Betrieb ist oder die Zubereitungphase des in der Trommel aufgenommenen Lebensmittels abgeschlossen ist.

In einer anderen Ausgestaltung der Erfindung, welche eine als Brüheinheit ausgebildete Heißluft-Zubereitungseinrichtung umfasst, ist der die Öffnung am Gerätegehäuse abdeckende Deckel fest mit dem Aufnahmekorb verbunden. Der Aufnahmekorb ist aus der Trommel entnehmbar und in die Trommel wieder einsetzbar ausgebildet, wobei der Deckel eine Stirnseite der Trommel bevorzugt vollständig abdeckt. Die Aufnahmefächer des Aufnahmekorbes erstrecken sich im Wesentlichen senkrecht zur Deckelebene. Der Deckel ist bevorzugt lösbar mit der aus der Kammer der Heißluft-Zubereitungseinrichtung entnehmbaren Trommel verbunden.

Zudem ist bevorzugt an dem Deckel ein Griffteil zum reversiblen Entkoppeln und Koppeln der Trommel von Hand von und mit der Halterung in der Kammer der erfindungsgemäßen Heißluft-Zubereitungseinrichtung vorgesehen ist. Mithilfe des am Deckel angeordneten Griffteils erfolgt das Lösen der Trommel am Aufnahmeteil und das Entnehmen der Trommel aus der Kammer, um beispielsweise die Trommel mit einer Portion eines zuzubereitenden Lebensmittels, wie beispielsweise Pommes Frites, zu bestücken. Nach dem Befüllen der Trommel wird dann die Trommel über das Griffteil in die Kammer eingeschoben und durch eine Drehung der Trommel, entgegen der üblichen Antriebsrichtung innerhalb der Kammer, wird die Trommel wieder mit dem Aufnahmeteil der Halterung gekoppelt. Bei der Kopplung der Trommel mit dem Aufnahmeteil werden die Verriegelungselemente der Trommel mit den Rastelementen am Aufnahmeteil der Halterung verrastet. Der die Trommel frontseitig verschließende Deckel ist vorzugsweise mit einer isolierend wirkenden Doppelverglasung ausgerüstet.

Um bei der Zubereitung der Lebensmittel in der sich drehenden Trommel zu verhindern, dass Einzelstücke des Lebensmittels zwischen die Außenseite der Trommel und die Innenseite der Kammer gelangen, ist in einer Ausgestaltung der Erfindung vorgesehen, den Abstand geringer als einen Millimeter auszubilden. Eine alternative Ausgestaltung der Erfindung sieht vor, dass entlang der Entnahmeöffnung ein Abdichtmittel angeordnet ist, das nach dem Einsetzen in Anlage mit der Innenseite der Kammer gelangt und den Spalt bevorzugt vollständig abdichtet. Eine weitere alternative Ausgestaltung sieht die Verwendung einer die Befüll- und Entnahmeöffnung verschließenden, aufsetzbaren und abnehmbaren Abdeckung vor.

In einer anderen Ausgestaltung der erfindungsgemäßen Vorrichtung weist die drehbare Trommel ein oder mehrere mit der Kammerrückwand oder dem Heißluft-Einlass und/oder der Deckel der Trommel mit der Außenseite der Gerätefront des Gerätegehäuses in abdichtende Anlage bringbare Dichtungsteile auf. Bevorzugt wird an beiden Stirnseiten der Trommel eine Labyrinthdichtung ausgebildet. Mittels der Labyrinthdichtung wird vermieden, dass der durch die Trommel strömende Heißluftstrom einen nicht gewollten Weg innerhalb des Gerätegehäuses geht oder an Wandbereichen aus dem Gerätegehäuse austritt, die nicht dafür bestimmt sind. Mithilfe der Dichtungsteile, welche beispielsweise typische Gummidichtungen sein können, wird einem ungewollten Austritt der Heißluft und möglicher damit mitgetragener Dunst oder Geruchspartikel an der Öffnung der Kammer entgegengewirkt. Daher ist mittels der erfindungsgemäßen Heißluft-Zubereitungseinrichtung eine Zubereitung von Lebensmitteln möglich, die bei der Zubereitung von Lebensmittel eine deutlich reduzierte Geruchsbelastung verursacht.

Gemäß einer anderen Ausgestaltung der erfindungsgemäßen Vorrichtung weist die Kammer im Bodenbereich ein aus der Kammer entnehmbares Aufnahmereservoir für flüssige Rückstände auf. Bevorzugt bei der Herstellung bzw. Zubereitung der Lebensmittel im inneren der Kammer entstehende Dämpfe oder Flüssigkeiten, die sich an der Innenseite der Kammer ablagern, werden über das im Bodenbereich vorhandene Aufnahmereservoir aufgefangen. Das Aufnahmereservoir ist beispielsweise als eine rinnenartige Vertiefung im Bodenbereich der Kammer ausgebildet. Vorzugsweise ist das Aufnahmereservoir mit einer für Flüssigkeiten durchlässige Abdeckung abgedeckt. Eine Ausgestaltung der Erfindung sieht vor, dass das Aufnahmereservoir eine aus der Kammer entnehmbare Auffangschale umfasst.

Bevorzugt weist die Kammer eine Innenwandung mit einer die Reinigung begünstigenden Oberfläche auf. Dadurch ist sichergestellt, dass an der Innenwandung anhaftende Rückstände von einem zuvor vorgenommenen Zubereitungsvorgang einfach von der Innenwandung der Kammer entfernt werden können. Die Innenwandung der Kammer kann beispielsweise mit einer Beschichtung ausgerüstet sein, die beispielsweise die Reinigung begünstigt oder das Anhaften von Verschmutzungen grundsätzlich erschwert. Optional ist vorgesehen, dass die Trommel eine die Reinigung begünstigende Oberfläche auf der den Aufnahmeraum für die Lebensmittel aufnehmenden Innenseite und auch der der Kammerwandung zugewandten Außenseite aufweist.

Eine weitere Ausgestaltung der erfindungsgemäßen Vorrichtung schlägt vor, dass die Heißluft-Zubereitungseinrichtung eine Zugabeeinheit zum bevorzugt tropfenförmigen Hinzugeben von Flüssigkeit in den Heißluftstrom aufweist. Mittels der mit dem Heißluftstrom verbundenen können Zugabestoffe, wie beispielsweise Fett oder Öl, in den durch das Gerätegehäuse geführten Heißluftstrom eingegeben werden, die den Zubereitungsvorgang des Lebensmittels in der Trommel begünstigen bzw. beschleunigen. Die Zugabeeinheit weist bevorzugt eine Dosierpumpe auf, welche mit einem Sammelbehälter fluidleitend gekoppelt ist, aus dem die hinzu zugebende Flüssigkeit angesaugt wird. Die Dosierpumpe gibt die Flüssigkeit bevorzugt in Abhängigkeit von der beispielsweise innerhalb der Trommel erfassten bzw. gemessenen Zusammensetzung des Heißluftstromes in diesen ab. In einer anderen Ausführungsform der Erfindung wird anstelle von geringen Mengen an Fett oder Öl, Wasser in den Heißluftstrom eingebracht. Insbesondere bei einer als Brüheinheit ausgebildeten Heißluft-Zubereitungseinrichtung ist damit eine verkürzte Zubereitungszeit der zuzubereitenden Lebensmittel, wie beispielsweise Koch- oder Brühwürste, erreicht. Bevorzugt erfolgt das Hinzugeben des Wassers in die Heißluft kontinuierlich. Die als heißer Wasserdampf vorliegende Heißluft wird vorzugsweise vor dem Abgeben aus dem Gerätegehäuse abgekühlt. Damit ist erreicht, dass ein Großteil der im Heißluftstrom enthaltenen Feuchtigkeit auskondensiert und nicht in die Umgebung gelangt. Bevorzugt wird das Kondensat aufgefangen und der Zugabeeinheit für das Wasser für ein erneutes Eingeben in den Heißluftstrom zugeführt.

Eine Weiterbildung der erfindungsgemäßen Vorrichtung zeichnet sich durch einen die Heißluft-Zubereitungseinrichtung mit der Aufnahmeeinrichtung für die Fleischerzeugnisse verbindenden, bevorzugt eine Teilmenge des Heißluftstromes überleitenden Kanal aus. Der innerhalb der Heißluft-Zubereitungseinrichtung erzeugte Heißluftstrom wird in einer optionalen Ausgestaltung der Erfindung verwendet, um die Aufnahmeeinrichtung für die zu garenden Fleischerzeugnisse, auch als Grilleinrichtung bezeichnet, vorzuwärmen bzw. während des Garvorgangs zusätzlich zumindest ein Teil der von der Heißluft-Zubereitungseinrichtung erzeugten Heißluft in die Grilleinrichtung zu leiten. Darüber ist eine gleichmäßigere Verkrustung der Oberflächen der Fleischerzeugnisse in der Grilleinrichtung erreicht. Durch die auf die Fleischerzeugnisse geleitete Heißluft nimmt die Oberfläche zudem eine beschleunigte Brauntönung an. Um zumindest eine Teilmenge des Heißluftstromes von der Heißluft-Zubereitungseinrichtung in die Aufnahmeeinrichtung, auch bezeichnet als Grilleinrichtung, für die Fleischerzeugnisse überleiten zu können, weist die erfindungsgemäße Vorrichtung einen bei den Komponenten miteinander verbindenden Kanal auf. Der Überleitungskanal kann bevorzugt gezielt geöffnet und verschlossen werden, sodass das Überleiten der Heißluft in die Aufnahmeeinrichtung für die Fleischerzeugnisse bedarfsgerecht erfolgen kann.

Die Heißluft-Zubereitungseinrichtung ist mit einer bevorzugt elektronischen Steuereinheit zum Steuern der Temperatur und/oder Zubereitungszeit signalleitend gekoppelt. Mithilfe der Steuereinheit erfolgt bevorzugt die Regelung der Temperatur innerhalb der die Trommel aufnehmenden Kammer sowie die Regelung der Zubereitungszeit des in der Trommel zu zubereitenden Lebensmittels. Gleichzeitig erfolgt mit der elektronischen Steuereinheit auch das Steuern der Drehbewegung des Antriebsmittels für die Trommel. Dadurch lässt sich das Anfahren und/oder Anhalten der Trommel bezogen auf einen vorbestimmten Drehwinkel in der Kammer gezielt steuern. Das Antriebsmittel, welches bevorzugt ein Schrittmotor aufweist, wird derart gesteuert angetrieben, dass die Trommel angehalten wird, dass die Befüll- und Entnahmeöffnung am Umfang der Trommel ungefähr eine Viertelkreisdrehung vor Erreichen ihrer oberen Stellung steht. Durch Verdrehen der Trommel von Hand mittels des Griffteils wird die Verbindung der Trommel zum Aufnahmeteil gelöst und gleichzeitig die Befüll- und Entnahmeöffnung in die obere Stellung der Kammer bewegt. Die Trommel kann nun entnommen werden, ohne das Risiko, dass das in der Trommel befindliche bereits zubereitete Lebensmittel über die nunmehr nach oben weisenden Öffnung ungewollt herausfällt. Eine alternative Ausgestaltung der Erfindung sieht vor, dass die Heißluft-Zubereitungseinrichtung und die Aufnahmeeinrichtung für die Fleischerzeugnisse, auch als Grilleinrichtung bezeichnet, jeweils eine elektronische Steuereinheit aufweist. Eine bevorzugte Ausgestaltung sieht jedoch vor, dass die Grilleinrichtung und die Heißluft-Zubereitungseinrichtung über eine gemeinsame elektronische Steuereinheit gesteuert werden.

Die Steuereinheit ist vorzugsweise signalleitend mit Sensormitteln zum Erfassen der Temperatur in der Aufnahmeeinrichtung für die Fleischerzeugnisse und/oder der Heißluftzubereitungseinrichtung und/oder mit optischen und/oder akustischen Signalgebern zur Ausgabe von Hinweissignalen verbunden. Mithilfe der Sensormittel können relevante für die Zubereitung in der Grilleinrichtung für die Fleischerzeugnisse und in der Heißluft-Zubereitungseinrichtung vorhandene Zustandsgrößen, wie z.B. die Temperatur oder die Zusammensetzung in der Heißluft überwacht und geregelt werden. Ebenso lassen sich die Offenstellung bzw. Verschlussstellung möglicher Klappen im Kanal für den durch das Gerätegehäuse geführten Heißluftstrom überwachen und regeln. Als Sensormittel kommen beispielsweise Temperatursensoren, Drucksensoren oder Feuchtigkeitssensoren oder Endlagenschalter zum Einsatz. Mithilfe optischer und/oder akustischer Signalgeber kann beispielsweise das Überschreiten voreinstellbarer Temperaturgrenzwerte oder auch das Erreichen der voreinstellbaren Garzeit angezeigt werden. Als optische oder akustische Signalgeber werden beispielsweise Leuchtmittel oder Lautsprecher eingesetzt.

Gemäß einer Ausgestaltung der erfindungsgemäßen Vorrichtung zeichnet sich diese durch eine Abluft-Filtereinheit aus, über die der durch das Gerätegehäuse geführte Luftstrom geleitet wird, welche vorzugsweise stromabwärts der Aufnahmeeinrichtung für die Fleischerzeugnisse angeordnet ist. Mithilfe der Abluft-Filtereinheit wird vermieden, dass mit dem Heißluftstrom mitgeführte Geruchs- oder Feuchtigkeitspartikel in die Umgebung gelangen. Die Filtereinheit ist bevorzugt einem Auslass für den durch das Gerätegehäuse geleiteten Heißluftstrom vorgeschaltet angeordnet. Die durch die erfindungsgemäße Vorrichtung erzeugte Geruchsbelastung kann durch die Filtereinheit auf ein Minimum reduziert werden, wodurch der Einsatz in Schnellrestaurants und Imbissbetrieben ohne Probleme möglich ist. Die Filtereinheit weist ein oder mehrere Filterelemente auf, welche Aktivkohle und andere Filterstoffe enthalten. Die Filtereinheit ist bevorzugt eingerichtet, einen Großteil der Geruchsemmission der mittels der erfindungsgemäßen Vorrichtung umgesetzten Garprozesse aus Grilleinrichtung und Heißluft-Zubereitungseinrichtung zu absorbieren.

Vorzugsweise ist die Abluft-Filtereinheit an einer Auslassöffnung an der Außenseite des Gerätegehäuses angeordnet, wobei die Filtereinheit ein austauschbares Filterelement aufweist. Eine an der Außenseite des Gerätegehäuses angeordnete Abluft-Filtereinheit ermöglicht einen vereinfachten Zugang zum Filtersystem und damit einen einfachen Wechsel des Filterelementes, ohne Bereiche des Gerätegehäuses entfernen zu müssen. Der Auslassöffnung am Gerätegehäuse ist eine rahmenartige Steckaufnahme zugeordnet, in die das Filterelement zur Außenseite des Gerätegehäuses abdichtend eingeschoben und aus der auch wieder entnehmbar ist. Mit der Verwendung eines Filterelements, welches bevorzugt Aktivkohle aufweist, ist eine Bindung von durch den Luftstrom mitgetragenen Partikeln oder Geruchsstoffen gewährleistet. Bevorzugt können die Filterelemente aromatisiert oder mit Duftstoffen versehen sein.

Eine alternative Ausgestaltung sieht vor, dass in Strömungsrichtung der Abluft hinter der Filtereinheit ein Luftkanal angeordnet ist, in den separat zum Filterelement ausgebildete Duftpads eingesetzt werden können. Die Duftpads und die Filterelemente können somit unabhängig voneinander ausgetauscht werden.

Eine optionale Ausgestaltung der Erfindung sieht vor, dass auf der Geräteoberseite zusätzlich ein Brühwursterhitzer angeordnet ist. Bevorzugt nutzt der Brühwursterhitzer die Abwärme der Grilleinrichtung und der Heißluft-Zubereitungseinrichtung. Der Brühwursterhitzer weist einen hitzebeständigen Behälter, beispielsweise aus Glas, auf, mit einem an der Oberseite des Behälters öffenbaren und verschließbaren Deckel. In dem Behälter befindet sich ein Vorratsgefäß mit einer Menge an Wasser, das durch die an den Behälter abgegebene Abwärme erhitzt wird und darüber das Wasser in der Schale auf eine Temperatur von bevorzugt 70° bis 90°C erwärmt wird. Oberhalb der Schale ist ein Gitter für darüber aufnehmbare Brühwürste angeordnet. Über den aus dem Vorratsgefäß aufsteigenden Wasserdampf werden die darüber befindlichen Brühwürste erwärmt, welche durch die Berührung mit ausschließlich dem Wasserdampf über mehrere Stunden für den Verzehr bereitgehalten werden können.

Gemäß einer besonders bevorzugten Ausführungsform der vorliegenden Erfindung, zeichnet sich die erfindungsgemäße Vorrichtung zum Erhitzen und/oder Garen von Lebensmitteln durch eine Kühleinrichtung für insbesondere noch zuzubereitende Lebensmittel aus. Der Erfindung liegt die Erkenntnis zugrunde, dass mithilfe einer in der Vorrichtung vorgesehenen Kühleinrichtung noch nicht zubereitete Lebensmittel auf einfache Weise zwischengelagert werden können. Bevorzugt weist die Kühleinrichtung ein Kühlaggregat auf, mit dem die Kühl-Kammer, welche sonst zum Durchführen eines Heißluftstromes verwendet wird, auf eine vorgegebene Kühltemperatur gebracht werden kann. Als Kühlaggregat kann beispielsweise ein Pelletier-Element eingesetzt werden, das einen geringen Stromverbrauch aufweist und insbesondere geeignet ist, um bereits vorgekühlte Produkte energieeffizient auf eine vorgebende Kühltemperatur zu halten. Ein solches Pelletier-Element weist zudem einen geringen Platzbedarf innerhalb des Gerätegehäuses der erfindungsgemäßen Vorrichtung auf.

Die Kühleinrichtung umfasst ein in die Kühl-Kammer am Gerätegehäuse einsetzbares und wieder entnehmbares Aufnahmefach für die kühl zu haltenden Lebensmittel-Produkte. Bevorzugt ist die Kühl-Kammer im Gerätegehäuse unterhalb der Grilleinrichtung mit ihren in zwei Aufnahmefächer am Gerätegehäuse einsetzbaren Einsetzkassetten angeordnet. Die Kühl-Kammer und das in die Kammer einsetzbare Aufnahmefach weisen vorzugsweise eine zylindrische Form auf. Das Aufnahmefach weist nahezu über seine Gesamtlänge und über etwa ein Winkelmaß von etwa 1/3 des Gesamtumfangs erstreckend eine Befüll- und Entnahmeöffnung für die kühl zu haltenden Lebensmittel auf. Am Aufnahmefach der Kühl-Einrichtung ist gleichzeitig ein die Öffnung der Kühl-Kammer am Geräte-Gehäuse verschließender Deckel angeordnet.

Im Folgenden wird die Erfindung anhand eines bevorzugten Ausführungsbeispiels unter Bezugnahme auf die beigefügten Figuren näher beschrieben. Hierbei zeigen:
- Fig. 1:: Eine perspektivische Ansicht der erfindungsgemäßen Vorrichtung;
- Fig. 2:: Eine perspektivische Ansicht der Vorrichtung nach Fig. 1 im Teilschnitt;
- Fig. 3:: Eine perspektivische Teilansicht der erfindungsgemäßen Grilleinrichtung;
- Fig. 4:: Eine perspektivische Teilansicht einer alternativen Ausgestaltung einer Abluft-Filtereinheit
- Fig. 5 und 6:: Perspektivische Darstellungen der erfindungsgemäßen Einsetzkassette in geschlossenem und geöffnetem Zustand;
- Fig. 7:: Eine perspektivische Ansicht der erfindungsgemäßen Vorrichtung nach Fig. 1 mit entnommener Einsatzkassette und Trommel;
- Fig. 8 bis 11:: Perspektivische Ansichten einer alternativer Ausführungsformen der erfindungsgemäßen Einsetzkassetten;
- Fig. 12:: Eine perspektivische Detailansicht der erfindungsgemäßen Heißluft-Zubereitungseinrichtung;
- Fig. 13:: Eine perspektivische Darstellung der erfindungsgemäßen Trommel;
- Fig. 14:: Eine Detailansicht des erfindungsgemäßen Antriebmittels nach Fig. 7;
- Fig. 15:: Eine weitere Ausführungsform einer erfindungsgemäßen Vorrichtung;
- Fig. 16:: Eine perspektivische Ansicht eines Aufnahmekorbes für Lebensmittel, und
- Fig. 17:: Eine dritte Ausführungsform einer erfindungsgemäßen Vorrichtung.

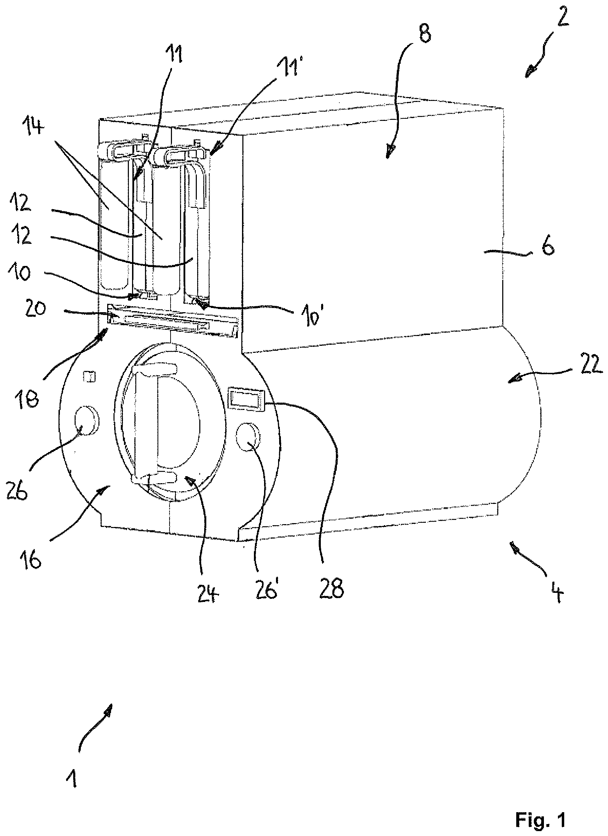

In Figur 1 ist eine Vorrichtung 1 zum Erhitzen und/oder Garen von Lebensmitteln gezeigt, welche eine Aufnahmeeinrichtung 2, insbesondere für Fleischerzeugnisse und eine Heißluft-Zubereitungseinrichtung 4 für Lebensmittel aufweist, wie beispielsweise Pommes Frites. Die erfindungsgemäße Vorrichtung ist als Kombigerät ausgebildet, welche ein Gerätegehäuse 6 umfasst, in dem die Aufnahmeeinrichtung 2 und die Heißluft-Zubereitungseinrichtung 4 integriert angeordnet sind.

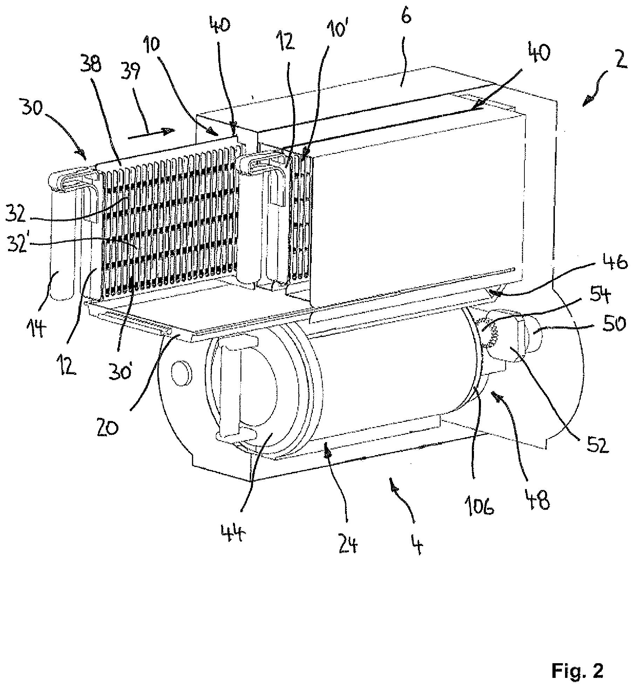

Die Aufnahmeeinrichtung 2, auch bezeichnet und ausgeführt als Grilleinrichtung 2, ist im vorliegenden Ausführungsbeispiel oberhalb der Heißluft-Zubereitungseinrichtung 4 angeordnet. Die Grilleinrichtung 2, welche im oberen quaderförmigen Abschnitt 8 des Gerätegehäuses 6 angeordnet ist, weist zwei Aufnahmefächer 10, 10' auf, welche über Öffnungen 11, 11' im Gerätegehäuse 6 zugänglich sind. Die Aufnahmeeinrichtung 2 für die Fleischerzeugnisse, nachfolgend als Grilleinrichtung 2 bezeichnet, ist dazu eingerichtet, zwei Einsetzkassetten 12, 12' aufzunehmen, die im vorliegenden Ausführungsbeispiel in die Aufnahmefächer 10, 10' eingesetzt sind. Zum Handhaben der Einsetzkassetten 12, 12' weisen diese jeweils einen Handgriff 14 auf, der an der Gerätegehäusefront 16 vorsteht. Unterhalb der Grilleinrichtung 2 ist ein Einschub 18 für einen sich in horizontaler Richtung erstreckenden Auffangbehälter 20 vorgesehen, über den beim Erhitzen und/oder Garen der Fleischerzeugnisse in der Grilleinrichtung 2 anfallende bzw. entstehende Flüssigkeiten aufgefangen werden. Im unteren, im Wesentlichen zylindrischen Abschnitt 22 des Gerätegehäuses 6 ist die Heißluft-Zubereitungseinrichtung 4 angeordnet, welche eine drehbar gelagerte Trommel 24 aufweist (Fig. 2). An der Gerätegehäusefront 16 sind des Weiteren Bedien- und Regelelemente 26, 26' sowie eine digitale Anzeigeeinrichtung 28 vorgesehen.

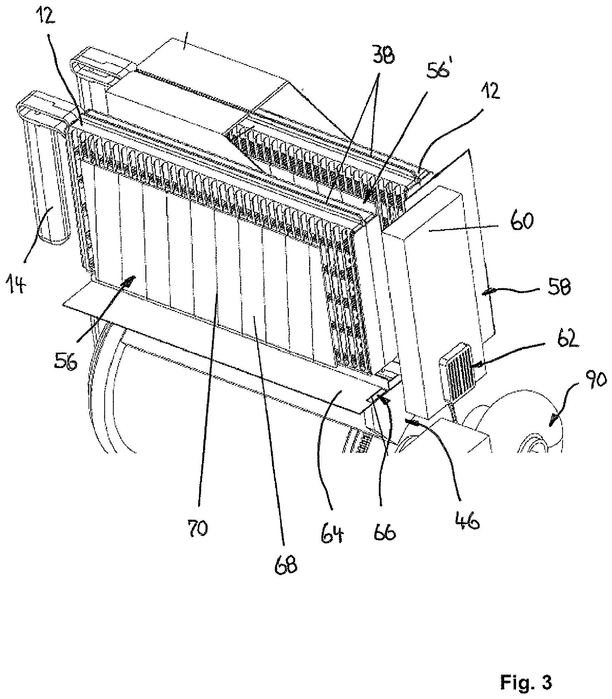

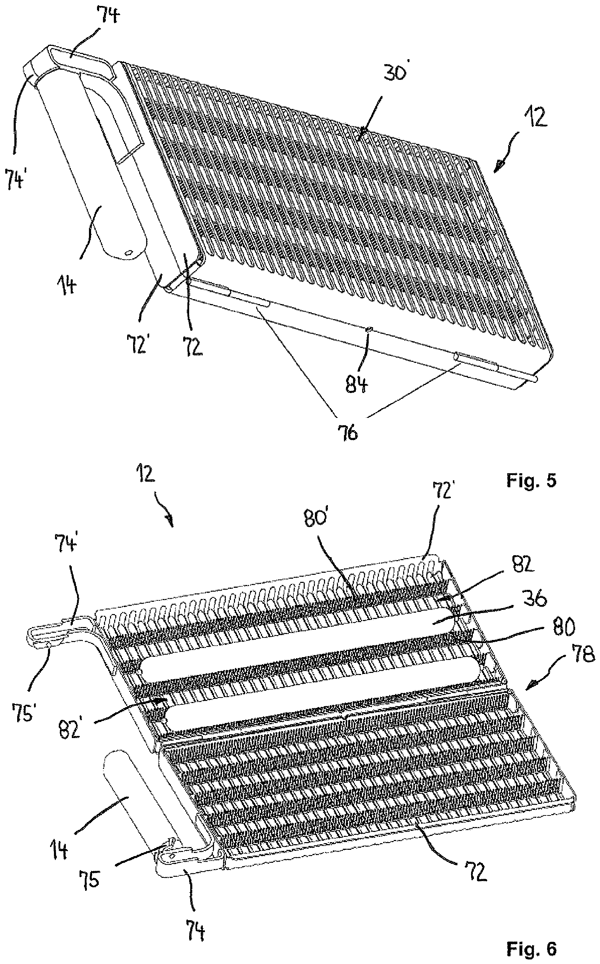

Wie Fig. 2 verdeutlicht, sind die Aufnahmefächer 10, 10' räumlich voneinander getrennt, wobei eine nicht näher dargestellte Isolierung in den Trennbereichen vorgesehen ist. Dadurch ist eine Wärmeübertragung von einem Aufnahmefach 10 zum benachbarten Aufnahmefach 10` vermieden. Die Einsetzkassetten 12, 12' weisen eine Außenhülle 29 mit vertikal verlaufenden Seitenwänden 30, 30' auf, die mit einer Vielzahl von Durchbrüchen 32, 32' ausgerüstet sind. Über die Durchbrüche 32, 32' kann die von einer Heizeinrichtung 34 (Fig. 3) der Grilleinrichtung 2 erzeugte Wärme unmittelbar auf die in den Einsetzkassetten 12, 12' eingelegten oder befindlichen Fleischerzeugnisse 36 (Fig.5) einwirken. Bevorzugt werden die Einsetzkassetten 12, 12' in ein jeweiliges Aufnahmefach 10, 10' eingeschoben bzw. herausgezogen. Die Einsetzkassetten 12, 12' weisen Anschlagelemente 38 auf, die in einer parallel zur Einsetzrichtung 39 der Einsetzkassetten 12, 12' verlaufenden Führung 40 geführt werden.

Die drehbar gelagerte Trommel 24 ist in einer im Wesentlichen zylindrischen Kammer 42 (Fig. 6) drehbar aufgenommen, wobei die Trommel 24 einen die Öffnung 43 der Kammer 42 im Gerätegehäuse 6 abdichtend verschließenden Deckel 44 aufweist, der fest mit der Trommel 24 verbunden bzw. Teil der Trommel 24 ist. Der mittels der Heißluft-Zubereitungseinrichtung 4 erzeugte Heißluftstrom wird aus der Kammer 42 über einen Abluftkanal 46 in Richtung der Grilleinrichtung 2 abgeleitet, mittels der die Grilleinrichtung vorgewärmt wird, bzw. die mit der Grilleinrichtung 2 zubereiteten Lebensmittel zusätzlich mit dem Heißluftstrom beaufschlagt werden. Die Drehtrommel 24 ist mit ihrem rückseitigen Ende mit einer Halterung 48 reversibel koppel- und entkoppelbar. Die Halterung 48 ist drehbar gelagert und mit einem Antriebsmittel 50 eine Drehbewegung übertragend verbunden. Das Antriebsmittel 50 ist über ein Koppelgetriebe 52 und ein Antriebsritzel 54 mit einem Aufnahmeteil 106 der Halterung 48 gekoppelt.

Fig. 3 zeigt die Grilleinrichtung 2 ohne, dass die Aufnahmefächer 10, 10` verdeckende Gerätegehäuse 6, wobei ersichtlich ist, dass die Heizeinrichtung 34 mehrere Heizelemente 56, 56' aufweist, die als Plattenheizkörper ausgebildet sind. Pro Aufnahmefach 10, 10' erstrecken sich zwei Heizelemente 56, 56' parallel zu den Seitenwänden 30, 30' der Einsetzkassetten 12, 12`. An der Rückseite der Grilleinrichtung 2 ist eine Abluft-Filtereinheit 58 mit einem Filterelement 60 und einer Auslassöffnung 62 angeordnet. Die Filtereinheit 58 ist der Auslassöffnung 62 vorgeschaltet. Mögliche innerhalb der Heißluft-Zubereitungseinrichtung 4 und in der Grilleinrichtung 2 entstehende Dämpfe oder Gerüche werden mittels der Abluft-Filtereinheit 58 aus dem durch die Vorrichtung 1 geführten Heißluftstrom herausgefiltert. Der die Vorrichtung 1 verlassende Luftstrom ist damit nahezu von Geruchsstoffen befreit. Für den Luftübertritt zwischen der Heißluft-Zubereitungseinrichtung 4 und der Grilleinrichtung weist die Vorrichtung 1 unterhalb der Grilleinrichtung 2 eine Bodenplatte 64 mit Einblasöffnungen 66 auf. Die als Plattenkörper ausgebildeten Heizelemente 56, 56' weisen eine Trägerplatte 68 aus Keramik und einen in der vorliegenden Ausführung spiralförmig um die Trägerplatte 68 gewickelten Widerstandsdraht 70 auf.

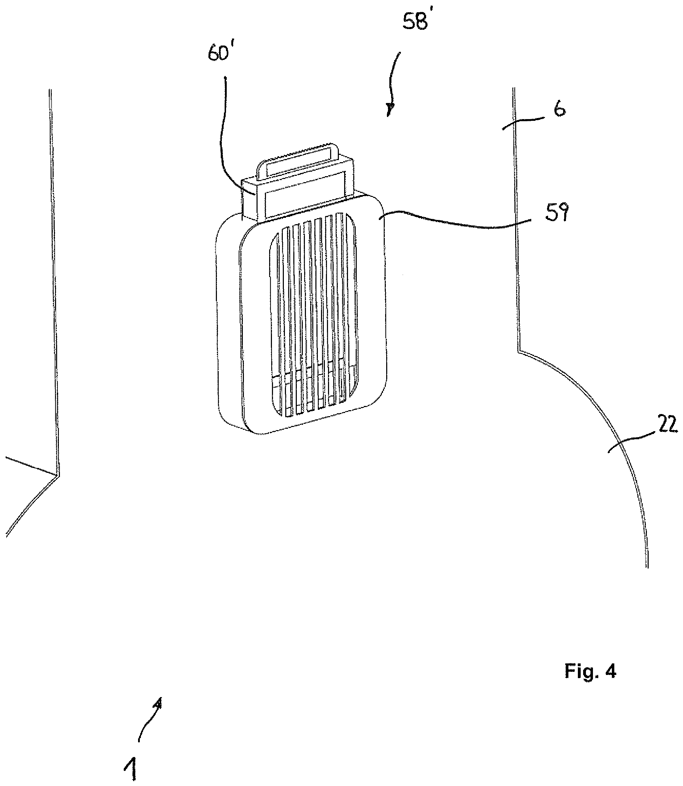

In Fig. 4 ist die Vorrichtung 1 mit einer alternativ ausgestalteten Abluft-Filtereinheit 58' gezeigt, die auf der Außenseite des Gerätegehäuses 6 angeordnet ist. Die Abluft-Filtereinheit 58` weist eine rahmenartige Steckaufnahme 59 auf, die der in Fig. 3 gezeigten Auslassöffnung 62 des Abluftstromes derart zugeordnet ist, dass die Auslassöffnung 62 vollständig verdeckt ist. In die Steckaufnahme 59 ist zum Beispiel ein Aktivkohlefilter aufweisendes Filterelement 60' einsteckbar. Im Abluftstrom mitgeführte Partikel und Geruchsstoffe werden entsprechend herausgefiltert.

Die Figuren 5 und 6 zeigen die Einsteckkassette 12 und sollen deren Aufbau verdeutlichen. Die Einsteckkassette 12' weist eine Außenhülle 29 aus zwei beweglich aneinander angelenkten Hüllenteilen 72, 72' auf. An der Außenhülle 29 ist ein zweiteiliger Griffträger 74, 74' angeordnet, wobei jedes Hüllenteil 72, 72' mit einem Teil des Griffträgers 74, 74' verbunden ist. Am Griffträger-Teil 74 ist der Handgriff 14 drehbar angeordnet, welcher je nach Drehstellung in einer Freigabepostion oder Sperrposition steht und somit das Auseinanderklappen der beiden Hüllenteile 72, 72` der Einsetzkassetten zulässt oder verhindert. Der am Griffträger-Teil 74 angeordnete Handgriff 14 ist insbesondere um eine sich parallel zur Teilungsebene der Hüllenteile 72, 72' angeordnete Drehachse drehbeweglich aufgenommen. In der Sperrpostion steht der Handgriff 14 mit seinem Verriegelungsabschnitt 75 in haltende Wirkverbindung mit einem Vorsprung 75` am Griffträger-Teil 74`. Die Hüllenteile 72, 72' sind über zwei, im Bodenbereich der Einsteckkassette 12 angeordnete Scharniere 76 aneinander angelenkt, Mittels der Scharniere 76 lassen sich die Hüllenteile 72, 72` der Einsteckkassette 12 um einen Winkel von etwa 180° zueinander verschwenken. Die Seitenwände 30, 30' sind in der gezeigten Ausführungsform gitterartig ausgebildet. Die Hüllenteile 72, 72' weisen auf der Innenseite den Aufnahmeraum 78 für die Fleischerzeugnisse 36 unterteilende Stege 80, 80' auf. Mittels der etwa senkrecht an der Innenseite der Seitenwände 30, 30' abstehenden und bevorzugt parallel zum Bodenbereich verlaufenden Stege, 80, 80' werden Einlegefächer 82, 82` ausgebildet. Darüber hinaus erhalten die zu garenden Fleischerzeugnisse 36 durch die erzeugten Einlegefächer 82, 82` eine vorbestimmte Ausrichtung innerhalb der Einsetzkassette 12, 12`. Im Bodenbereich der Einsetzkassette 12 ist eine Abtropföffnung 84 für innerhalb der Einsetzkassette entstehende Verdampfungs- oder Garflüssigkeiten vorgesehen. Eine alternative, nicht gezeigte Ausgestaltung der Einsetzkassetten sieht vor, dass anstelle der Stege 80, 80' in Abhängigkeit von den zuzubereitenden Fleischerzeugnissen, auswechselbare Einlegefächer eingesetzt werden.

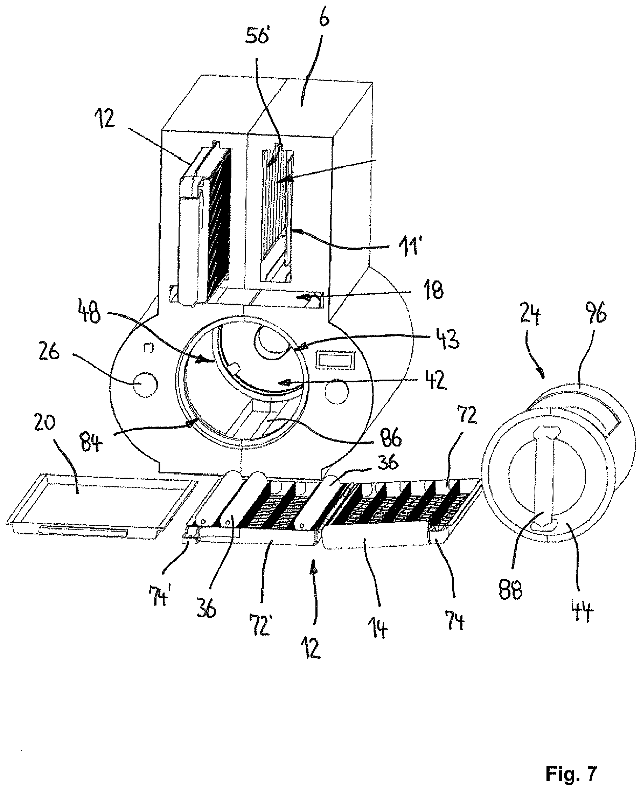

Wie Fig. 7 verdeutlicht, weisen die Aufnahmefächer 10, 10` der Grilleinrichtung 2 im Wesentlichen einen rechteckigen Querschnitt in Einsetzrichtung 39 für die etwa quaderförmigen Einsteckkassetten 12, 12' auf. Die Kammer 42 der Heißluft-Zubereitungseinrichtung 4 weist eine zylindrische Form auf. Im Bodenbereich 84 der Kammer 42 ist ein Aufnahmereservoir 86 für flüssige Rückstände ausgebildet. Die Innenwandung der Kammer weist eine die Reinigung begünstigende Oberfläche auf, wobei die Innenwandung aus einem Material mit einer glatten Oberfläche bzw. aus einem Material mit einer Anti-Haftbeschichtung besteht. Der am Mantel 96 der Trommel 24 fest angeordnete Deckel 44 ist mit einem Griffteil 88 zum reversiblen Entkoppeln und Koppeln der Trommel 24 von und mit der Halterung 48 ausgerüstet.

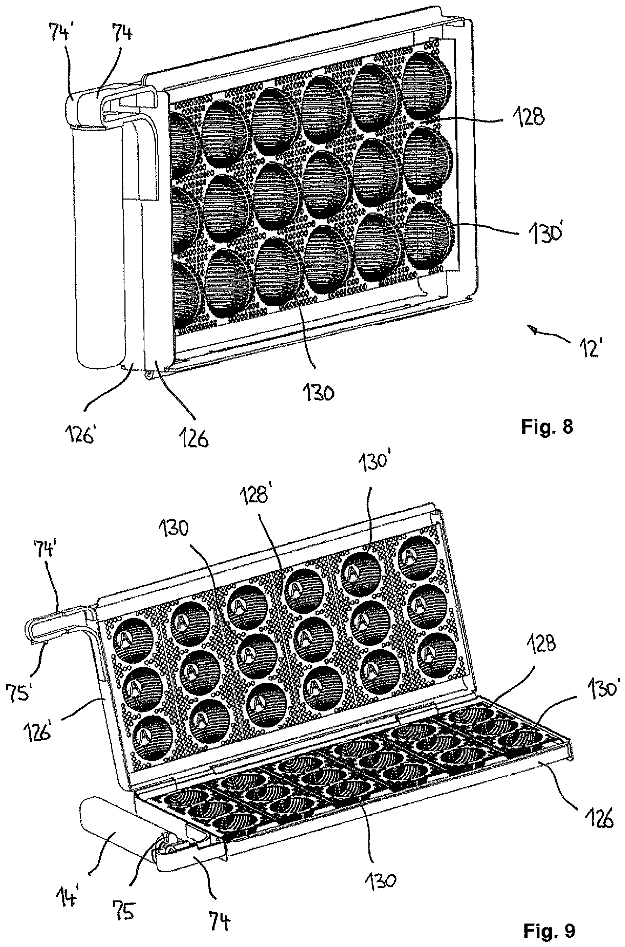

Die Figuren 8 und 9 zeigen ein weiteres Ausführungsbeispiel einer in die Aufnahmefächer 10, 10` der Vorrichtung 1 einsetzbaren Einsetzkassette 12` die zwei beweglich aneinander angelenkte Hüllenteile 126, 126` aufweist. Die Hüllenteile 126, 126` weisen jeweils einen Plattenkörper 128, 128` auf, der jeweils an seinem dem Plattenkörper des anderen Hüllenteiles zugewandten Flächenbereich miteinander korrespondierende Vertiefungen 130, 130` aufweist. Die Vertiefungen 130, 130' sind derart auf den einander zugewandten Flächen angeordnet, dass zwei miteinander korrespondierende halbkugelförmig ausgebildete Vertiefungen 130, 130`, wenn die Hüllenteile 126, 126' zusammengeklappt sind, einen kugelförmigen Hohlraum ausbilden. In dem kugelförmigen Hohlraum können kugelförmige Produkte aus einer pastösen Masse, wie beispielsweise Wurstbrät zubereitet werden. Zum Arretieren der Hüllenteile 126, 126' miteinander dient, wie bei der oben beschriebenen Ausführung, der Handgriff 14', der drehbar am Hüllenteile 126 über einen Griffträger 74 angeordnet ist. Durch Drehung des Handgriffes 14' wird dieser mit seinem Verriegelungsabschnitt 75 in Eingriff mit einem Vorsprung 75` am Griffträger 74' am anderen Hüllenteil 126` gebracht, wie zu den Figuren 5 und 6 bereits näher beschrieben.

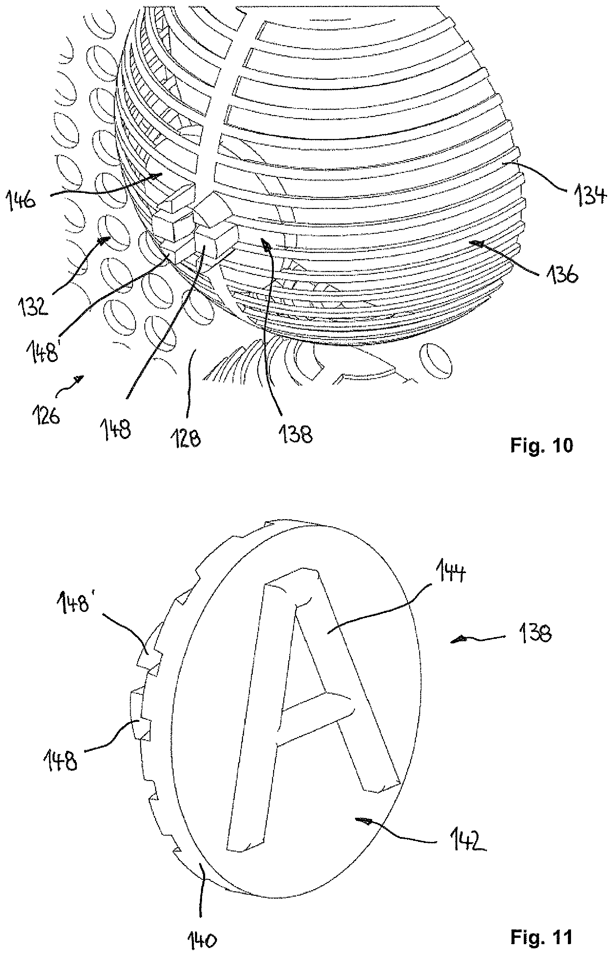

Fig. 10 zeigt beispielhaft einen Detailbereich des Hüllenteiles 126 von der Außenseite. Wie zu erkennen ist, weist der Plattenkörper 128 Durchlassöffnungen 132 und die die Vertiefung 130 ausbildende Wandung 134 schlitzartige Durchbrüche 136 auf. In den Vertiefungen 130, 130' sind Prägeeinsätze 138, 138' positionierbar, die eingerichtet sind während der Zubereitung der kugelförmigen Brätlinge Schriftzeichen oder Zahlen in der Oberfläche der Bratlinge auszubilden.

Der beispielhaft in Fig. 11 gezeigte Prägeeinsatz 138 weist ein kreisförmiges, ebenes Prägeteil 140 auf. Das Prägeteil 140 weist auf seiner dem kugelförmigen Hohlraum zugewandten Oberfläche 142 ein an der Oberfläche vorstehendes, erhabenes Schriftzeichen 144 in Form eines A auf. Auf der Rückseite 146 des Prägeteiles 140 sind mehrere Klemm-, beziehungsweise Steckteile 148, 148' senkrecht hervorstehend ausgebildet. Mit den Klemm-, beziehungsweise Steckteilen 148, 148' wird der Prägeeinsatz 138 in der Wandung 134 der halbkugelförmigen Vertiefung 130 am Hüllenteil 126 fixiert. Die Verbindung zwischen der Wandung 134, der Vertiefung und den Klemm-, beziehungsweise Steckteilen 146, 146' des Prägeeinsatzes 138 wird über eine Kraft- oder Formschlussverbindung erreicht, wodurch der Prägeeinsatz 138 an den Hüllenteilen 126, 126` der Einsetzkassette 12' austauschbar ausgestaltet ist.

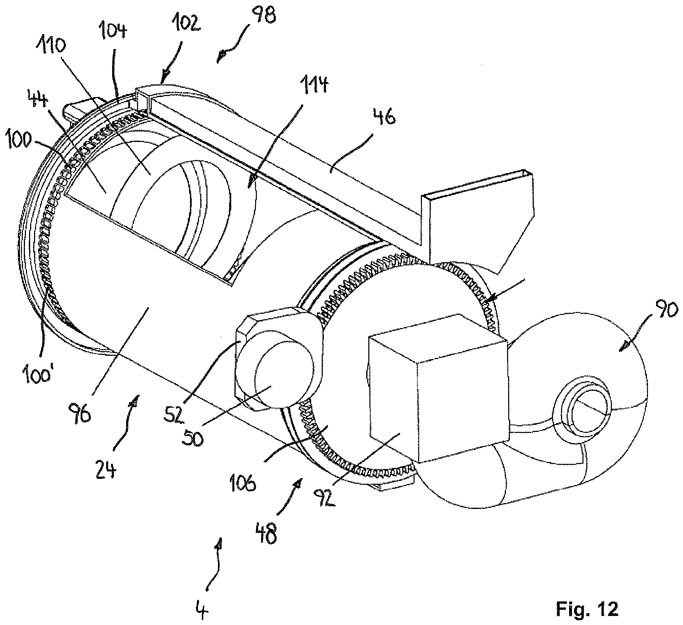

Fig. 12 zeigt eine Detailansicht der Heißluft-Zubereitungseinrichtung 4, welche ein Gebläse 90 aufweist, das einen innerhalb des Gerätegehäuses 6 geführten Luftstrom erzeugt. Innerhalb des Gerätegehäuses ist dazu ein nicht genauer dargestellter Kanal vorgesehen. Des Weiteren weist die Heißluft-Zubereitungseinrichtung 4 ein Heizgerät 92 auf, das innerhalb des erzeugten Luftstromes angeordnet ist, und diesen auf die benötigte Temperatur aufheizt. Der von Gebläse 90 und Heizgerät 92 erzeugte Heißluftstrom wird rückseitig über eine Zentralöffnung 94 in der Stirnwand 116 (Fig.8) in die Trommel 24 eingeleitet und strömt in Richtung der Längsachse, der einen zylindrischen Mantel 96 aufweisenden Trommel 24. Durch die Drehung der Trommel wird das in der Trommel befindliche Lebensmittel gleichmäßig dem durch die Trommel hindurchströmenden Heißluftstrom ausgesetzt. Der dem Deckel 44 zugeordnete Endbereich 98 der Trommel 24 weist benachbart zum Deckel im Mantel bevorzugt umfangsseitig angeordnete Auslässe 100, 100' auf. Über die Auslässe 100, 100', welche die Form von Langlöchern aufweisen, tritt der Heißluftstrom aus der Trommel 24 in radialer Richtung aus. Den Auslässen 100, 100` ist eine Abluftführung 102 zugeordnet, über die und den daran angeschlossenen Abluftkanal 46 die Heißluft in die Grilleinrichtung 2 übergeleitet wird. Der Deckel 44 der Trommel 24 weist mit der Gerätegehäusefront 16 in Anlage bringbare Dichtungsteile 104 auf, sodass die Öffnung 43 im Gerätegehäuse 6 abdichtend abgedeckt ist. Zum Antreiben der Trommel 24 wird das Antriebsmittel 50 eingesetzt, das mithilfe des Antriebsritzels (Fig. 2) die Halterung 48 antreibt, wobei die Halterung 48 ein Aufnahmeteil 106 mit einer Außenverzahnung 108 aufweist.

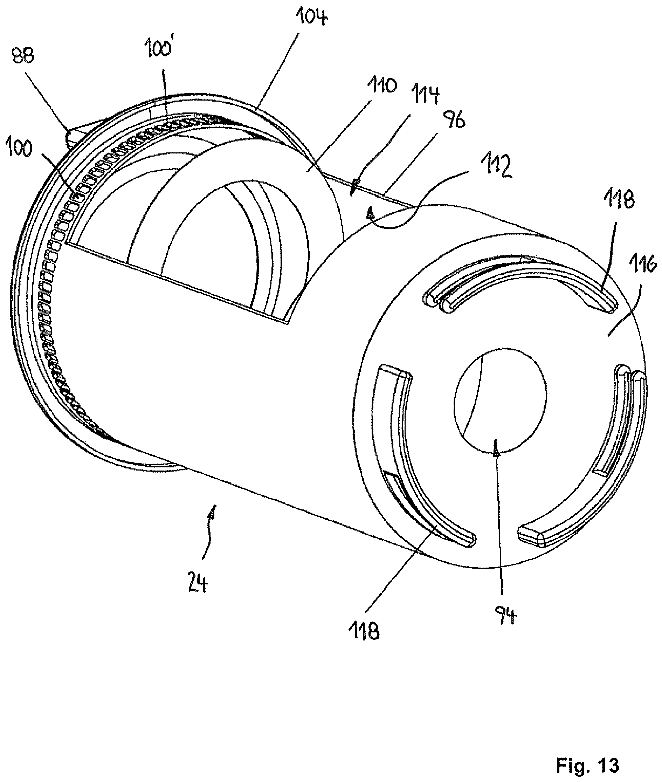

Fig. 13 verdeutlicht die Ausgestaltung der Trommel 24, welche eine Wendel 110 zum Umwälzen der in der Trommel 24 aufgenommenen Lebensmittel umfasst. Die Wendel 110 ist spiralförmig ausgebildet und erstreckt sich zumindest abschnittsweise entlang der inneren Mantelfläche 112 des Trommel-Mantels 96. Die aus der Kammer 42 entnehmbare Trommel 24 weist im Mantel 96 eine Befüll- und Entnahmeöffnung 114 auf, welche sich in vorliegendem Ausführungsbeispiel etwa über dreiviertel der Gesamtlänge der Trommel erstreckt und ein Öffnungsmaß in Umfangsrichtung der Trommel 24 von etwa einem Fünftel des Gesamtumfangs aufweist. An der dem Deckel 44 gegenüberliegend angeordneten Stirnwand 116 weist die Trommel 24 auf der Außenseite mehrere Verriegelungsteile 118 auf, die mit Rastelementen 120 der Halterung 48 korrespondieren.

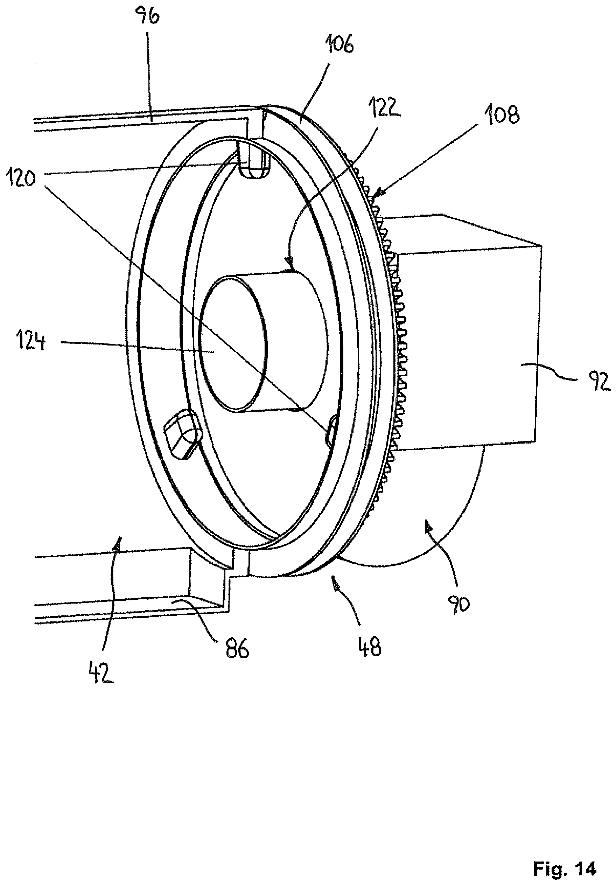

Fig. 14 ist ein Teilschnitt der Kammer 42 der Heißluft-Zubereitungseinrichtung 4, wobei auf die Darstellung der Trommel 24 zum besseren Verständnis verzichtet wird. Die Halterung 48 weist ein an der Rückseite der Kammer 42 das drehbar gelagerte Aufnahmeteil 106 auf, an dem in radialer Richtung nach innen vorstehende Rastelemente 120 angeordnet sind. Die Rastelemente 120 werden von den gabelförmigen Verriegelungsteilen 118 (Fig. 8) der Trommel 24 um- oder hintergriffen, wodurch eine in Antriebsrichtung drehfeste Verbindung zwischen Halterung 48 und Trommel 24 erzeugt wird. Um die Trommel 24 von der Halterung 48 entkoppeln zu können, ist die Trommel 24 über das Griffteil 88 am Deckel 44 entgegen der Antriebsrichtung zu verdrehen. Das Aufnahmeteil 106 weist mittig zur Rotationsachse einen Durchbruch 122 auf, durch den ein Heißluft-Einlass 124 des Gebläses 90 hindurch ragt und der sich bis durch die Zentralöffnung 94 an der Stirnwand 116 der Trommel 24 erstreckt. Damit ist ein zuverlässiger Eintrag des erzeugten Heißluftstromes in die Trommel 24 gewährleistet.

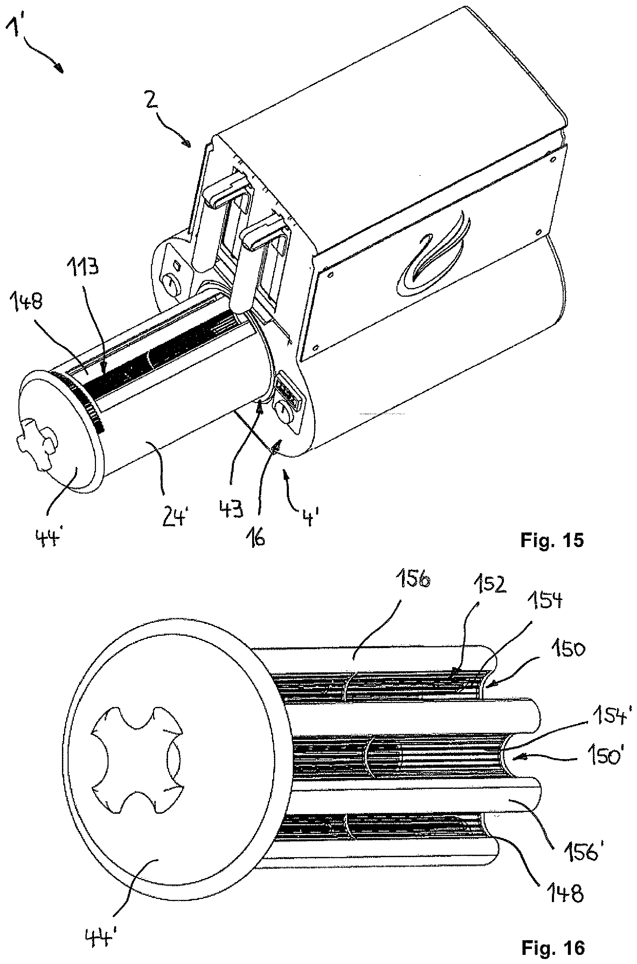

Figur 15 zeigt eine weitere Ausführungsform einer erfindungsgemäßen Vorrichtung 1', welche eine Grilleinrichtung 2 und eine unterhalb der Grilleinrichtung 2 angeordnete Heißluft-Zubereitungseinrichtung 4' aufweist. Hinsichtlich der konstruktiven Merkmale der Grilleinrichtung 2 wird auf die oben beschriebenen Ausführungen zu den vorherigen Ausführungsbeispielen verwiesen. Die als Brüheinheit ausgebildete Heißluft-Zubereitungseinrichtung 4 weist eine drehbar gelagerte Trommel 24' mit einem Aufnahmeraum 113 und einem im Aufnahmeraum 113 angeordneten Aufnahmekorb 148 auf. Der Aufnahmekorb 148 ist insbesondere eingerichtet, die zuzubereitenden Lebensmittel, wie beispielsweise Koch- oder Brühwürste, in einer vorgegebenen Ausrichtung bzw. Anordnung gezielt dem durch die Kammer 42 strömenden Heißluftstrom auszusetzen. Die Trommel 24' ist zusammen mit dem Aufnahmekorb 148 und mit dem fest am Aufnahmekorb angeordneten Deckel 44' in die Öffnung 43 in die Gerätegehäusefront 16 einsetzbar. Dabei wird die Öffnung 43 der Kammer 42 durch den Deckel 44' abdichtend verschlossen.

Figur 16 zeigt eine Detailansicht des Aufnahmekorbes 148 und dem an einer Stirnseite des Aufnahmekorbes angeordneten Deckels 44`. Der Aufnahmekorb 148 weist umfangsseitig mehrere gleichmäßig verteilt angeordnete Aufnahmefächer 150, 150' auf. Jedes Aufnahmefach 150, 150' weist eine Wandfläche 152 mit einer bereichsweise zylindrischen Form auf. Die Wandfläche 152 ist aus einer Vielzahl von parallel und im Abstand zueinander angeordneten Stäben 154, 154' ausgebildet. Die Wandfläche 152 weist somit eine Vielzahl von in Längsrichtung der Aufnahmefächer 150, 150' verlaufende Durchbrüche auf, über die der erzeugte Heißdampf mit der Oberfläche der zuzubereitenden Lebensmittel in Kontakt gelangt. Zwischen den Aufnahmefächern 150, 150' sind jeweils Verbindungsstrukturen 156, 156' mit konvex geformten Wandabschnitten angeordnet, die im Gegensatz zu den Wandflächen 152 der Aufnahmefächer 150, 150' geschlossene Wandflächen ausbilden.

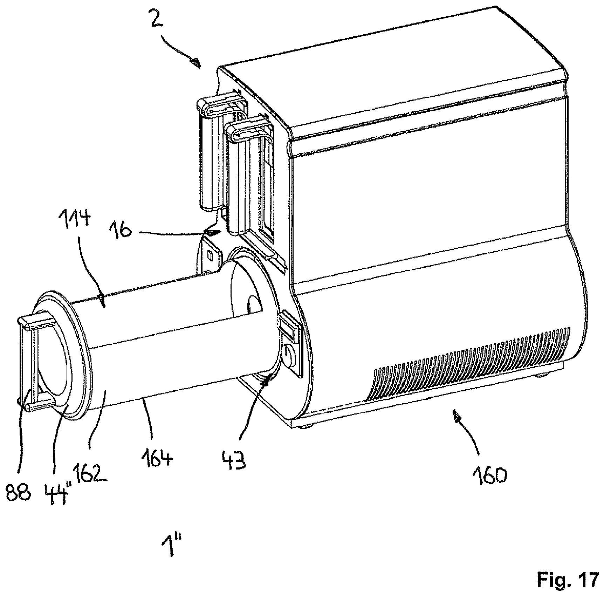

In Figur 17 ist ein weiteres Ausführungsbeispiel einer erfindungsgemäßen Vorrichtung 1" gezeigt, welche neben der Grilleinrichtung 2 eine Kühleinrichtung 160 für zumindest das Zwischenlagern von zuzubereitenden Lebensmitteln aufweist. Die Kühleinrichtung 160 ist wie auch die Heißluft-Zubereitungseinrichtung 4, 4' unterhalb der Grilleinrichtung 2 angeordnet und weist eine Öffnung 43 in der Gerätegehäusefront 16 auf. Die Kühleinrichtung 160 umfasst eine im Wesentlichen zylindrische Kühl-Kammer, in die ein komplementär ausgebildetes Aufnahmefach für die Lebensmittel einsetzbar und wieder entnehmbar ist. Das Aufnahmefach weist wie die Kühl-Kammer eine im Wesentlichen zylindrische Wandung 164 auf an der eine Befüll- und Entnahmeöffnung 114 vorgesehen ist. Die Befüll- und Entnahmeöffnung 114 erstreckt sich im Wesentlichen über die Gesamtlänge des Aufnahmefaches 162. An einer Stirnseite des Aufnahmefaches ist ein Deckel 44" angeordnet, der fest mit dem Aufnahmefach 162 verbunden ist. Der Deckel 44" deckt nach dem Einsetzen des Aufnahmefaches 162 in die Kühl-Kammer die Öffnung 43 der Kühleinrichtung 160 abdichtend ab. Am Deckel 44" ist ein Griffteil 88 angeordnet. Mit dem Griffteil 88 wird das Aufnahmefach 162 aus der Kühl-Kammer herausgezogen bzw. in die Kühl-Kammer wieder eingeschoben.

### Bezugszeichenliste

- 1, 1', 1": Vorrichtung
- 2: Grilleinrichtung
- 4, 4`: Heißluft-Zubereitungseinrichtung
- 6: Gerätegehäuse
- 8: Abschnitt
- 10, 10`: Aufnahmefach
- 11, 11', 43: Öffnung
- 12, 12': Einsetzkassette
- 14, 14': Handgriff
- 16: Gerätegehäusefront
- 18: Einschub
- 20: Auffangbehälter
- 22: Zylindrischer Abschnitt
- 24, 24': Trommel
- 26, 26': Bedien-, Regelelemente
- 28: Anzeigeeinrichtung
- 29: Außenhülle
- 30, 30': Seitenwand
- 32, 32': Durchbruch
- 34: Heizeinrichtung
- 36: Fleischerzeugnis
- 38: Anschlagelement
- 39: Einsetzrichtung
- 40: Führung
- 42: Kammer
- 43: Öffnung
- 44, 44`, 44": Deckel
- 46: Abluftkanal
- 48: Halterung
- 50: Antriebsmittel
- 52: Koppelgetriebe
- 54: Antriebsritzel
- 56, 56': Heizelement
- 58, 58': Abluft-Filtereinheit
- 59: Steckaufnahme
- 60, 60': Filterelement
- 62: Auslassöffnung
- 64: Bodenplatte
- 66: Einblasöffnungen
- 68: Trägerplatte
- 70: Widerstandsdraht
- 72, 72`: Hüllenteile
- 74, 74': Griffträger
- 75: Verriegelungsabschnitt
- 75`: Vorsprung
- 76: Scharniere
- 78: Aufnahmeraum
- 80, 80': Stege
- 82, 82': Einlegefach
- 84: Bodenbereich
- 86: Aufnahmereservoir
- 88: Griffteil
- 90: Gebläse
- 92: Heizgerät
- 94: Zentralöffnung
- 96: Mantel
- 98: Endbereich
- 100, 100`: Auslass
- 102: Abluftführung
- 104: Dichtungsteil
- 106: Aufnahmeteil
- 108: Außenverzahnung
- 110: Wendel
- 112: Mantelfläche
- 113: Aufnahmeraum
- 114: Befüll-, Entnahmeöffnung
- 116: Stirnwand
- 118: Verriegelungsteil
- 120: Rastelement
- 122: Durchbruch
- 124: Heißluft-Einlass
- 126, 126`: Hüllenteil
- 128, 128`: Plattenkörper
- 130, 130`: Vertiefung
- 132: Durchlassöffnung
- 134: Wandung
- 136: Durchbruch
- 138, 138': Prägeeinsatz
- 140: Prägeteil
- 142: Oberfläche
- 144: Schriftzeichen
- 146, 146`: Klemm- bzw. Steckteile
- 148: Aufnahmekorb
- 150, 150`: Aufnahmefach
- 152: Wandfläche
- 154, 154: Stab
- 156, 156`: Verbindungsteg
- 160: Kühleinrichtung
- 162: Aufnahmefach
- 164: Wandung

## Patentansprüche

1. Vorrichtung (1) zum Erhitzen und/oder Garen von Lebensmitteln, insbesondere von Fleischerzeugnissen, mit
einem Gerätegehäuse (6) mit wenigstens einer Öffnung (11, 11'),
einer Grilleinrichtung für zu erhitzende Fleischerzeugnisse,
einer der Grilleinrichtung zugeordneten Heizeinrichtung (34) mit einem oder mehreren Heizelementen (56, 56'),
wobei die Grilleinrichtung ein oder mehrere Aufnahmefächer (10, 10'), welches über die Öffnung (11, 11') zugänglich ist, und eine mit einem jeweiligen Aufnahmefach (10, 10`) korrespondierende Einsetzkassette (12, 12`) aufweist, welche mit einem oder mehreren Fleischerzeugnissen in vorbestimmter Ausrichtung zueinander bestückbar und eingerichtet ist, in das Aufnahmefach (10, 10`) eingeführt und daraus wieder entnommen zu werden,
**gekennzeichnet durch,**
zusätzlich eine Heißluft-Zubereitungseinrichtung (4) für Lebensmittel,
wobei die Heißluft-Zubereitungseinrichtung (4) eine Kammer (42) und eine oder mehrere in einem Heißluftstrom in der Kammer drehbeweglich aufnehmbare Trommel (24) umfasst, welche eingerichtet ist, die Lebensmittel in der Trommel (24) gleichmäßig den die Kammer (42) durchströmenden Heißluftstrom auszusetzen.

2. Vorrichtung nach Anspruch 1,
**dadurch gekennzeichnet, dass** das oder die Aufnahmefächer (10, 10`) eine sich im Wesentlichen in horizontaler Richtung erstreckende Einsetzrichtung (39) aufweist, und vorzugsweise die Öffnung (11, 11') im Gerätegehäuse (6) durch einen Wandbereich der im Aufnahmefach (10, 10`) einsetzbaren Einsetzkassette (12, 12`) im Wesentlichen vollständig ausgefüllt ist.

3. Vorrichtung nach mindestens einem der Ansprüche 1 und 2,
**dadurch gekennzeichnet, dass** die Einsetzkassette (12, 12`) eine Außenhülle (29) aus vorzugsweise zwei beweglich aneinander angelenkten Hüllenteilen (72, 72', 126, 126`) aufweist.

4. Vorrichtung nach Anspruch 3,
**dadurch gekennzeichnet, dass** die Hüllenteile (72, 72`) in vorbestimmten Abständen parallel zueinander verlaufende Stege (80, 80') zum Unterteilen des Aufnahmeraumes (78) für die Fleischerzeugnisse aufweist.

5. Vorrichtung nach Anspruch 3,
**dadurch gekennzeichnet, dass** die Hüllenteile (126, 126`) als zwei beweglich aneinander angelenkte Plattenkörper (128, 128`) ausgebildet sind, die auf einander zugewandten Flächenbereichen miteinander korrespondierende Vertiefungen (130, 130') aufweisen.

6. Vorrichtung nach mindestens einem der Ansprüche 3 bis 5,
**dadurch gekennzeichnet, dass** die Hüllenteile (72, 72`) der Einsetzkassette (12, 12`) bevorzugt nach außen vorstehende Anschlagelemente (38) aufweisen, welche eingerichtet sind, die miteinander in Anlage gebrachten Hüllenteile (72, 72') auf Abstand zu halten und in einer Führung (40) des Aufnahmefaches (10, 10`) aufgenommen zu werden.

7. Vorrichtung nach mindestens einem der Ansprüche 1 bis 6,
**dadurch gekennzeichnet, dass** die Einsetzkassette (12, 12`) einen Handgriff (14) aus einem bevorzugt isolierenden Material aufweist, der vorzugsweise drehbar an einem Griffträger (74) eines ersten Hüllenteiles (72, 126) angeordnet und eingerichtet ist, mit seinem Verriegelungsabschnitt (75) mit einem Vorsprung (75`) am Griffträger (74`) des zweiten Hüllenteiles (72', 126') durch Verdrehen um seine Längsachse in eine Sperrposition oder Freigabeposition gebracht zu werden.

8. Vorrichtung nach einem der vorhergehenden Ansprüche,
wobei die Heißluft-Zubereitungseinrichtung (4) ein Gebläse (90) und ein Heizgerät (92) aufweist, wobei das Heizgerät (92) im vom Gebläse (90) erzeugten und innerhalb des Gerätegehäuses (6) geführten Luftstrom angeordnet ist.

9. Vorrichtung nach mindestens einem der vorhergehenden Ansprüche,
**dadurch gekennzeichnet, dass** die Trommel (24) einen bevorzugt zylindrischen Aufnahmeraum (113) für die Lebensmittel aufweist und mit einer Zentralöffnung (94) zum Einbringen von Heißluft an vorzugsweise einer Stirnwand (116) ausgerüstet ist.

10. Vorrichtung nach mindestens einem der vorhergehenden Ansprüche,
**dadurch gekennzeichnet, dass** die Trommel (24) eine sich entlang ihrer inneren Mantelfläche (112) spiralförmig erstreckende, feststehende Wendel (110) zum Umwälzen der in der Trommel (24) aufgenommenen Lebensmittel oder einen in der Trommel verstellbaren Aufnahmekorb (148) mit einem oder mehreren entlang des Korbumfanges verteilt angeordneten Aufnahmefächern (150, 150') für die Lebensmittel umfasst.

11. Vorrichtung nach mindestens einem der vorhergehenden Ansprüche,
**dadurch gekennzeichnet, dass** die Trommel (24) reversibel koppel- und entkoppelbar mit einer in der Kammer (42) drehbaren gelagerten Halterung (48) ist, wobei die Halterung (48) mit einem Antriebsmittel (50) drehgebend gekoppelt ist.

12. Vorrichtung nach mindestens einem der vorhergehenden Ansprüche,
**dadurch gekennzeichnet, dass** die Trommel (24) einen die Öffnung (43) der Kammer (42) im Gerätegehäuse (6) abdeckenden, bevorzugt transparenten Deckel (44) aufweist, welcher starr mit dem Mantel (96) der Trommel (24) verbunden ist.

13. Vorrichtung nach mindestens einem der vorhergehenden Ansprüche,
**dadurch gekennzeichnet, dass** die drehbare Trommel (24) ein oder mehrere mit der Kammerrückwand oder dem Heißluft-Einlass (124) und/oder der Deckel (44) der Trommel (24) mit der Außenseite der Gerätegehäusefront (16) des Gerätegehäuses (6) in abdichtende Anlage bringbare Dichtungsteile (104) aufweist.

14. Vorrichtung nach mindestens einem der vorstehenden Ansprüche,
**gekennzeichnet durch** einen die Heißluft-Zubereitungseinrichtung (4) mit der Aufnahmeeinrichtung für die Fleischerzeugnisse verbindenden, bevorzugt eine Teilmenge des Heißluftstromes überleitenden Abluftkanal (46).

15. Vorrichtung nach mindestens einem der vorhergehenden Ansprüche,
**dadurch gekennzeichnet, dass** die Heißluft-Zubereitungseinrichtung (4) und/oder die Heizeinrichtung (34) der Grilleinrichtung (2) mit einer bevorzugt elektronischen Steuereinheit zum Steuern der Gartemperatur und/oder Garzeiten signalleitend gekoppelt ist.

16. Vorrichtung nach mindestens einem der vorhergehenden Ansprüche,
**gekennzeichnet durch** eine Abluft-Filtereinheit (58) über die der durch das Gerätegehäuses (6) geführten Luftstromes geleitet wird, welche vorzugsweise stromabwärts der Aufnahmeeinrichtung für die Fleischerzeugnisse angeordnet ist.

17. Vorrichtung nach mindestens einem der vorhergehenden Ansprüche,
**gekennzeichnet durch** eine Kühleinrichtung (160) für die Lebensmittel.

## Claims

1. Apparatus for heating and/or cooking foodstuffs, in particular meat products, comprising
an appliance housing (6) with at least one opening (11, 11'),
a grill device for meat products to be heated, and
a heating device (34) associated with the grill device and having one or more heating elements (56, 56'),
wherein the grill device has one or more accommodating compartments (10, 10') which is accessible by way of the opening (11, 11'), and an insertion cassette (12, 12') which corresponds to a respective accommodating compartment (10, 10') and which can be loaded with one or more meat products in a predetermined orientation relative to each other and is adapted to be introduced into and removed again from the accommodating compartment (10, 10'),
**characterised by** a hot air preparation device (4) for foodstuffs,
wherein the hot air preparation device (4) includes a chamber (42) and one or more drums (24) which can preferably be rotatably received in the hot air flow, which is adapted to expose foodstuffs in the drum (24) uniformly to the hot air flow flowing through the chamber (42).

2. Apparatus as set forth in claim 1 **characterised in that** the accommodating compartment or compartments (10, 10') has an insertion direction (39) extending substantially in the horizontal directions and preferably the opening (11, 11') in the appliance housing (6) is substantially completely filled up by a wall region of the insertion cassette (12, 12') which can be inserted in the accommodating compartment (10, 10').

3. Apparatus as set forth in claim 1 or claim 2 **characterised in that** the insertion cassette (12, 12') has an outer casing (29) comprising preferably two moveably mutually pivotably connected casing portions (72, 72', 126, 126').

4. Apparatus as set forth in claim 3 **characterised in that** the casing portions (72, 72') have limbs (80, 80') extending parallel to each other at predetermined spacings for subdividing the accommodating chamber (78) for the meat products.

5. Apparatus as set forth in claim 3 **characterised in that** the casing portions (126, 126') are in the form of two plate bodies (128, 128') which are pivotably moveably connected together and which on mutually facing surface regions have mutually corresponding recesses (130, 130').

6. Apparatus as set forth in at least one of claims 3 through 5 **characterised in that** the casing portions (72, 72') of the insertion cassette (12, 12') have preferably outwardly projecting abutment elements (38) which are adapted to hold the casing portions (72, 72') which are brought into contact with each other at a spacing and to be received in a guide (40) of the accommodating compartment (10, 10').

7. Apparatus as set forth in at least one of claims 1 through 6 **characterised in that** the insertion cassette (12, 12') has a handle (14) of a preferably insulating material, which is preferably arranged rotatably on a handle carrier (74) of a first casing portion (12) and is adapted to be brought into a locking position or a release position with its locking portion (75) with a projection (75') on the handle carrier (74') of the second casing portion (12) by rotation about its longitudinal axis.

8. Apparatus as set forth in at least one of the preceding claims wherein the hot air preparation device (4) comprises a fan (90) and a heating unit (92), wherein the heating unit (92) is disposed in the air flow produced by the fan (90) and guided within the appliance housing (6).

9. Apparatus as set forth in at least one of the preceding claims **characterised in that** the drum (24) has a preferably cylindrical accommodating chamber (113) for the foodstuffs and is provided with a central opening (94) for the introduction of hot air at preferably an end wall (116).

10. Apparatus as set forth in at least one of the preceding claims **characterised in that** the drum (24) has a stationary spiral member (110) extending in a spiral form along its inside peripheral surface (112) for circulating the foodstuffs accommodated in the drum (24) or includes an accommodating basket (148) displaceable in the drum and having one or more accommodating compartments (150, 150') arranged distributed along the basket periphery for accommodating the foodstuffs.

11. Apparatus as set forth in at least one of the preceding claims **characterised in that** the drum (14) can be reversibly coupled and uncoupled with a holding means (48) mounted rotatably in the chamber (42), wherein the holding means (48) is rotationally drivingly coupled to a drive means (50).

12. Apparatus as set forth in at least one of the preceding claims **characterised in that** the drum (24) has a preferably transparent cover (44) which covers the opening (43) of the chamber (42) in the appliance housing (6) and which is rigidly connected to the peripheral portion (96) of the drum (24).

13. Apparatus as set forth in at least one of the preceding claims **characterised in that** the rotatable drum (24) has one or more sealing portions (104) which can be brought into sealing contact with the chamber rear wall or the hot air inlet (124) and/or the cover (44) of the drum (24) has sealing portions (104) which can be brought into sealing contact with the outside of the appliance housing front (16) of the appliance housing (6).

14. Apparatus as set forth in at least one of the preceding claims **characterised by** a discharge air passage (46) which connects the hot air preparation device (4) to the accommodating device for the meat products and which preferably carries a partial amount of the hot air flow.

15. Apparatus as set forth in at least one of the preceding claims **characterised in that** the hot air preparation device (4) and/or the heating device (34) of the grill device (2) is coupled in signal-conducting relationship to a preferably electronic control unit for controlling the cooking temperature and/or cooking times.

16. Apparatus as set forth in at least one of the preceding claims **characterised by** a discharge air filter unit (58) by way of which the air flow passed through the appliance housing (6) is passed, which is preferably arranged downstream of the accommodating device for the meat products.

17. Apparatus as set forth in at least one of the preceding claims **characterised by** a cooling device (160) for the foodstuffs.

## Revendications

1. Dispositif (1) de réchauffage et/ou de cuisson de produits alimentaires, en particulier de produits carnés, avec
un boîtier d'appareil (6) avec au moins une ouverture (11, 11'),
un système de grill pour les produits carnés à chauffer,
un système de chauffage (34) associé au système de grill, avec un ou plusieurs éléments de chauffage (56, 56'),
dans lequel le système de grill présente un ou plusieurs compartiments de réception (10, 10'), lequel/lesquels est accessible ou sont accessibles par l'intermédiaire de l'ouverture (11, 11'), et une cassette d'insertion (12, 12') correspondant à un compartiment de réception (10, 10') respectif, laquelle peut être chargée avec un ou plusieurs produits carnés dans une orientation prédéfinie les uns par rapport aux autres et est mise au point pour être introduite dans le compartiment de réception (10, 10') et pour en être retirée à nouveau,
**caractérisé par**
en supplément un système de préparation d'air chaud (4) pour des produits alimentaires,
dans lequel le système de préparation d'air chaud (4) comprend une chambre (42) et un ou plusieurs tambours (24) pouvant être logé(s) de manière mobile en rotation dans la chambre dans un flux d'air chaud, lequel est mis au point pour exposer les produits alimentaires dans le tambour (24) de manière homogène au flux d'air chaud traversant la chambre (42).

2. Dispositif selon la revendication 1,
**caractérisé en ce que** le ou les compartiments de réception (10, 10') présente ou présentent une direction d'insertion (39) s'étendant sensiblement en direction horizontale, et de préférence l'ouverture (11, 11') est remplie sensiblement en totalité dans le boîtier d'appareil (6) par une zone de paroi de la cassette d'insertion (12, 12') pouvant être insérée dans le compartiment de réception (10, 10').

3. Dispositif selon au moins l'une quelconque des revendications 1 et 2,
**caractérisé en ce que** la cassette d'insertion (12, 12') présente une enveloppe externe (29) composée de préférence de deux parties d'enveloppe (72, 72', 126, 126') articulées l'une sur l'autre de manière mobile.

4. Dispositif selon la revendication 3,
**caractérisé en ce que** les parties d'enveloppe (72, 72') présentent, à des espacements prédéfinis, des entretoises (80, 80') s'étendant de manière parallèle les unes par rapport aux autres, destinées à diviser l'espace de réception (78) pour les produits carnés.

5. Dispositif selon la revendication 3,
**caractérisé en ce que** les parties d'enveloppe (126, 126') sont réalisées en tant que deux corps à plaques (128, 128') mutuellement articulés de manière mobile, qui présentent, sur des zones de face tournées les unes vers les autres, des renfoncements (130, 130') correspondant entre eux.

6. Dispositif selon au moins l'une quelconque des revendications 3 à 5,
**caractérisé en ce que** les parties d'enveloppe (72, 72') de la cassette d'insertion (12, 12') présentent de manière préférée des éléments de butée (38) dépassant de manière préférée vers l'extérieur, lesquels sont mis au point pour maintenir à distance les parties d'enveloppe (72, 72') amenées en appui les unes aux autres et pour être reçus dans une glissière (40) du compartiment de réception (10, 10').

7. Dispositif selon au moins l'une quelconque des revendications 1 à 6,
**caractérisé en ce que** la cassette d'insertion (12, 12') présente une poignée (14) composée d'un matériau de préférence isolant, qui est disposée de préférence de manière à pouvoir tourner sur un support de préhension (74) d'une première partie d'enveloppe (72, 126) et est mise au point pour être amenée, avec sa section de verrouillage (75), dans une position de blocage ou dans une position de déblocage par torsion autour de son axe longitudinal avec une partie faisant saillie (75') sur le support de préhension (74') de la deuxième partie d'enveloppe (72', 126').

8. Dispositif selon l'une quelconque des revendications précédentes,
dans lequel le système de préparation d'air chaud (4) présente une soufflante (90) et un appareil de chauffage (92), dans lequel l'appareil de chauffage (92) est disposé dans le flux d'air généré par la soufflante (90) et guidé à l'intérieur du boîtier d'appareil (6).

9. Dispositif selon au moins l'une quelconque des revendications précédentes,
**caractérisé en ce que** le tambour (24) présente un espace de réception (113) de manière préférée cylindrique pour les produits alimentaires et est équipé d'une ouverture centrale (94) destinée à introduire de l'air chaud sur de préférence une paroi frontale (116).

10. Dispositif selon au moins l'une quelconque des revendications précédentes,
**caractérisé en ce que** le tambour (24) comprend une spirale (110) immobile s'étendant en forme de spirale le long de sa surface enveloppante intérieure (112) destinée à faire circuler les produits alimentaires reçus dans le tambour (24) ou un panier de réception (148) pouvant être ajusté dans le tambour avec un ou plusieurs compartiments de réception (150, 150') pour les produits alimentaires disposés de manière répartie le long de la périphérie de panier.

11. Dispositif selon au moins l'une quelconque des revendications précédentes,
**caractérisé en ce que** le tambour (24) peut être couplé et découplé de manière réversible à une fixation (48) montée de manière à pouvoir tourner dans la chambre (42), dans lequel la fixation (48) est couplée de manière à transmettre une rotation à un moyen d'entraînement (50) .

12. Dispositif selon au moins l'une quelconque des revendications précédentes,
**caractérisé en ce que** le tambour (24) présente un couvercle (44) de manière préférée transparent recouvrant l'ouverture (43) de la chambre (42) dans le boîtier d'appareil (6), lequel est relié de manière rigide à l'enveloppe (96) du tambour (24).

13. Dispositif selon au moins l'une quelconque des revendications précédentes,
**caractérisé en ce que** le tambour (24) pouvant tourner présente une ou plusieurs parties d'étanchéité (104) pouvant être amenées en appui hermétique avec la paroi arrière de chambre ou l'entrée d'air chaud (124) et/ou avec le couvercle (44) du tambour (24) par le côté extérieur de la partie avant de boîtier d'appareil (16) du boîtier d'appareil (6).

14. Dispositif selon au moins l'une quelconque des revendications précédentes,
**caractérisé par** un canal d'air sortant (46) reliant le système de préparation d'air chaud (4) au système de réception pour les produits carnés, transférant de manière préférée une quantité partielle du flux d'air chaud.

15. Dispositif selon au moins l'une quelconque des revendications précédentes,
**caractérisé en ce que** le système de préparation d'air chaud (4) et/ou le système de chauffage (34) du système de grill (2) sont couplés avec acheminement de signaux à une unité de commande de manière préférée électronique destinée à commander la température de cuisson et/ou les temps de cuisson.

16. Dispositif selon au moins l'une quelconque des revendications précédentes,
**caractérisé par** une unité de filtration d'air sortant (58), par l'intermédiaire de laquelle le flux d'air guidé à travers le boîtier d'appareil (6) est acheminé, laquelle est disposée de préférence en aval du système de réception pour les produits carnés.

17. Dispositif selon au moins l'une quelconque des revendications précédentes,
**caractérisé par** un système de refroidissement (160) pour les produits alimentaires.
